(19) Europäisches Patentamt / European Patent Office / Office européen des brevets

(11) **EP 4 488 878 A1**

(12) **EUROPEAN PATENT APPLICATION**

(43) Date of publication:
**08.01.2025 Bulletin 2025/02**

(21) Application number: **23183261.9**

(22) Date of filing: **04.07.2023**

(51) International Patent Classification (IPC):
**G06N 3/045** (2023.01)  **G06F 21/16** (2013.01)
**G06N 3/084** (2023.01)  **G06N 3/094** (2023.01)
**G06F 21/12** (2013.01)

(52) Cooperative Patent Classification (CPC):
**G06N 3/045; G06F 21/12; G06F 21/16;
G06N 3/0464; G06N 3/084; G06N 3/094;**
G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Irdeto B.V.
2132 LS  Hoofddorp (NL)**

(72) Inventor: **Roelse, Peter
2132 LS Hoofddorp (NL)**

(74) Representative: **Boult Wade Tennant LLP
Salisbury Square House
8 Salisbury Square
London EC4Y 8AP (GB)**

(54) **METHODS OF OPERATING A NEURAL NETWORK**

(57)    A method of operating a first neural network, the first neural network configured to generate a result based on an input sample from a predetermined domain of possible samples, the first neural network trained to provide functionality corresponding to a subset of the domain, wherein the method comprises: receiving, from a user, a query having a query sample from the domain; and generating a response to the query; wherein generating the response to the query comprises: performing a test to determine whether or not the query sample is a member of the subset; in response to one or more first conditions being met, using the first neural network to generate a first result based on the query sample, and generating the response to the query based on the first result, wherein at least one first condition is that the test determines that the query sample is a member of the subset; and in response to one or more second conditions being met, using a watermarked version of the first neural network to generate a second result based on the query sample, and generating the response to the query based on the second result, wherein at least one second condition is that the test determines that the query sample is not a member of the subset.

FIGURE 4a

**Description**

**Field of the invention**

The present invention relates to methods of operating a neural network, and systems and computer programs for carrying out such methods.

**Background of the invention**

Neural networks that perform classification tasks are well-known. If $X$ denotes the set of all possible inputs to such a network and if k denotes the number of classes, then the network can be described by, or can be considered as implementing, a parameterized function $f_\theta : X \to [0,1]^k$. The function $f_\theta$ represents the parameters of the network, e.g. the configuration/architecture/structure of the network (e.g. number and type of layers, nodes, connectivity therebetween, activation functions, etc.), coefficients, weights, biases, etc. Some of these parameters may be learnable/learned via a process known as training. The parameter $\theta$ is referred to as the model and represents the learnable parameters. An element x of $X$ is referred to as a sample. The output $f_\theta(x)$ of the classification network $f_\theta$ is a k-dimensional vector. The i-th component of the output $f_\theta(x)$ (with $1 \le i \le k$ and $x \in X$) is denoted by $f_\theta(x)_i$ and is referred to as the activation strength of class i. The index i is referred to as the label of the class. It may be assumed without loss of generality that the final layer of the network $f_\theta$ uses the well-known *softmax* function so that $f_\theta(x)_i$ can be interpreted as the probability that x belongs to class i for $1 \le i \le k$, i.e. $0 \le f_\theta(x)_i \le 1$ for $1 \le i \le k$ and

$$\sum_{i=1}^{k} f_\theta(x)_i = 1.$$

It will be appreciated that the set $X$ of all possible inputs to the network $f_\theta$ depends on the classification task for which the network $f_\theta$ has been generated/designed. For example: if the network $f_\theta$ is intended to classify images based on their content (i.e. based on what those images depict), then the set $X$ may be the set of all possible images; if the network $f_\theta$ is intended to classify text-based files based on their content (i.e. based on the information conveyed or represented by those files), then the set $X$ may be the set of all possible text-based files; if the network $f_\theta$ is intended to classify songs to identify their genre, then the set $X$ may be the set of all possible audio files. Likewise, the number k of classes, and what those classes represent, depends on the classification task for which the network $f_\theta$ has been generated/designed. For example: if the network $f_\theta$ is intended to classify images into images that depict a dog, a cat, a bird, or a fish, then one could set $k = 4$ with the 4 classes being "dog", "cat", "bird", "fish", or one could set k = 5 with the 5 classes being "dog", "cat", "bird", fish", "no dog, cat, bird, or fish". It will be appreciated that many other examples and uses of classification using the network $f_\theta$ are possible.

There are also many different architectures for the network $f_\theta$, as well as many different methods of implementing the network $f_\theta$ in hardware and/or software, as will be readily appreciated by the skilled person.

One may assume that the index associated with the maximum value in $f_\theta(x)$ is unique and that the well-known *argmax* function, when applied to $f_\theta(x)$, therefore can be assumed to return an element of $\{1,2, ..., k\}$ instead of a subset of $\{1,2, ..., k\}$. Under these assumptions, $argmax_i f_\theta(x)_i$ is the label associated with the most likely class.

Let $\phi : X \to \{1,2, ..., k\}$ denote the function mapping an input $x \in X$ to its true/correct label $\phi(x)$. A train set

$$\mathcal{D}_{train} \coloneqq \{(x_i, \phi(x_i)) \mid x_i \in \mathcal{X} \wedge 1 \le i \le n_{train}\}$$ with $n_{train}$ elements is used to determine the value of the model $\theta$, in a process of supervised learning. The network $f_\theta$ is typically trained using only samples from the problem that is to be addressed by the network $f_\theta$. For example, if $f_\theta$ is an image classifier with two classes and if these classes are "airplane" and "ship", then any $x_i$ of $(x_i, \phi(x_i)) \in \mathcal{D}_{train}$ will be an image of either an airplane or a ship. The set of all Problem Domain (PD) samples is denoted herein by $X_0 \subset X$. Elements of the set $X_1 := X \backslash X_0$ are referred to herein as Non-Problem Domain (NPD) samples.

Sometimes, one of the classes of the network $f_\theta$ represents NPD samples. This means that such networks $f_\theta$ use both PD samples and NPD samples for training. For example, if the network $f_\theta$ is an image classifier intended to determine whether an image depicts a dog or a cat, then there may be three classes, namely "dog", "cat", "no dog or cat", in which case $X_0$ may be the set of images depicting dogs or cats, and $X_1$ may be set of images that depict neither a dog nor a cat.

Sometimes, the network $f_\theta$ may assign multiple labels to an input $x \in X$. For example, if the network $f_\theta$ is an image classifier intended to determine whether an image depicts a dog and/or a cat, then there may be four classes, namely "dog", "cat", "dog and cat", "no dog or cat", in which case $X_0$ may be the set of images depicting dogs and/or cats, and $X_1$ may be set of images that depict neither a dog nor a cat. The associated classification problem is known as multi-label classification.

A test set $\mathcal{D}_{test} := \{(x_i, \phi(x_i)) \mid x_i \in \mathcal{X} \wedge 1 \leq i \leq n_{test}\}$ with $n_{test}$ elements may be used to determine the accuracy of the trained network $f_\theta$. Different methods exist for measuring accuracy. If [P] denotes the Iverson bracket of a statement P, returning one if P is true and returning zero if P is false, then the widely-used "top-1 accuracy" is defined as

$$Acc(f_\theta) := \frac{1}{n_{test}} \sum_{(x,y) \in \mathcal{D}_{test}} [argmax_i f_\theta(x)_i = y]$$

, i.e. the proportion of samples x from the test set $D_{test}$ for which the predicted label $argmax_i f_\theta(x)_i$ matches the true label $\phi(x)$.

In general, the accuracy depends on the quality of the train set $D_{train}$, in particular on how well the samples of its elements represent the problem domain associated with the k classes (and on how well the samples of its elements represent the non-problem domain if one of these classes represents NPD samples).

Obtaining a high-quality train set $D_{train}$ can be difficult and time consuming. First, one needs to obtain PD samples $x_i \in X_0$ that represent the problem domain well. Typically, this can only be achieved if a large number of samples is used. Second, each of these samples $x_i \in X_0$ needs to be labelled with its true label $\phi(x_i)$ which may require substantial manual effort.

In one deployment scenario, a network $f_\theta$ may be implemented in the cloud, e.g. with a paid API being provided to enable access to, and use of, the network $f_\theta$. Such access may be offered as a pay-per-query service and enables customers to use the network $f_\theta$ without the need to train a network themselves. In another deployment scenario, a software/firmware application may implement a network $f_\theta$ in a consumer device, e.g. in a mobile device. Implementations of the network $f_\theta$ may be protected, e.g. by using read-proof and tamper-resistant hardware. The user may have API access to such a protected network $f_\theta$. Other deployment scenarios are, of course, possible. Whatever the context, in the following, a party that provides API access to the network $f_\theta$ is referred to as a service provider, and consumers (i.e. those who use the network $f_\theta$, e.g. via the API) are referred to as users of the network $f_\theta$. If a user submits a query having a query sample $x \in X$ to the network $f_\theta$, then the network $f_\theta$ typically returns either the vector $f_\theta(x)$ or the label $argmax_i f_\theta(x)_i$ (that is, an identification of, or the label associated with, the most likely class).

It has been shown that an adversary can clone the functionality of a trained network $f_\theta$. Such cloning of the network $f_\theta$ may be achieved by only using API access to the network $f_\theta$ - this is discussed, for example, in: (a) Florian Tramèr et al: "Stealing Machine Learning Models via Prediction APIs", Proceedings of the 25th USENIX Security Symposium August 2016, Austin, TX, pp. 601 - 618, hereinafter reference [1]; (b) Tribhuvanesh Orekondy et al: "Knockoff Nets: Stealing Functionality of Black-Box Models", Proceedings of the IEEE/CVF Conference on Computer Vision and Pattern Recognition (CVPR), Long Beach, CA, USA, 2019, pp. 4949 - 4958, hereinafter reference [2]; (c) Jacson Rodrigues Correia-Silva et al: "Copycat CNN: Stealing Knowledge by Persuading Confession with Random Non-Labeled Data", 2018 International Joint Conference on Neural Networks (IJCNN), 2018, Rio de Janeiro, Brazil, July 2018, pp. 1 - 8, hereinafter reference [3]; and (d) Arne Aarts et al: "Leveraging Partial Model Extractions using Uncertainty Quantification", 2021 IEEE 10th International Conference on Cloud Networking (CloudNet), Virtual Conference, November 2021, pp. 19 - 25, hereinafter reference [4].

To create a clone network, the adversary chooses a neural network $g_\phi : X \to [0,1]^k$, where the function $g_\phi$ represents the parameters of the clone network and where the model $\phi$ represents its learnable parameters. In practice, the adversary may not know the architecture of the network $f_\theta$, or they may have access to a better network (e.g. in terms of performance and/or implementation size while being capable of achieving a comparable top-1 accuracy). As a result, the network $g_\phi$ and its model $\phi$ are not necessarily the same as the network $f_\theta$ and its model $\theta$. For example, $g_\phi$ may have a different number of layers and/or different types of layer and/or a different number of learnable parameters.

Next, the adversary chooses m distinct samples $y_i \in X$ for $1 \leq i \leq$ m, for some positive integer m. After this, the adversary uses the API access to $f_\theta$ to create the set $\mathcal{D} := \{(y_i, f_\theta(y_i)) \mid 1 \leq i \leq m\}$. In other words, the adversary uses the API access to label each of the adversary's samples $y_i \in X$ for $1 \leq i \leq$ m.

Finally, the set $\mathcal{D}$ is used to train the clone network $g_\phi$, i.e. to determine the value of the model $\phi$.

Theoretically, the quality of the clone network $g_\phi$ could be expressed as its top-1 accuracy on the test set $D_{test}$, i.e.

$$Acc(g_\phi) = \frac{1}{n_{test}} \sum_{(x,y) \in \mathcal{D}_{test}} [argmax_i g_\phi(x)_i = y]$$
.

Likewise, theoretically, the quality of the clone network $g_\phi$ could be expressed as its top-1 agreement with the network $f_\theta$ on the test set $D_{test}$, i.e.

$$Agr(f_\theta, g_\phi) := \frac{1}{n_{test}} \sum_{(x,y) \in \mathcal{D}_{test}} [argmax_i f_\theta(x)_i = argmax_i g_\phi(x)_i].$$

In practice, though, the adversary will generally not have access to $D_{test}$. However, the adversary can create their own test set and compute the top-1 accuracy or agreement on this test set. Whilst PD samples with true labels are needed for computing the top-1 accuracy, the size of such a test set is typically very small in comparison with the size of a train set (otherwise the adversary could simply use their own test set as their train set instead of using the API access to $f_\theta$ to create the set D). Note that PD samples and true labels are not needed for computing the top-1 agreement, and that these computations use the API access to the network $f_\theta$.

In contrast to the training of the network $f_\theta$, the adversary can use PD samples and/or NPD samples for training the clone network $g_\phi$ since the API access to the network $f_\theta$ can be used to obtain $f_\theta(y_i)$ for any $y_i \in X$. For example, NPD samples are used in the cloning attacks on image classifiers presented in references [2], [3], and [4]. NPD samples are usually easy and cheap to obtain for an adversary. For example, if $f_\theta$ is an image classifier, then ImageNet (https://image-net.org/) is an example of a large, publicly available dataset that can be used to obtain NPD samples $y_i \in X_1$.

After the functionality of the network $f_\theta$ has been cloned, the adversary no longer needs to query the network $f_\theta$. This enables the adversary to end their subscription to the service/product provided by the service provider, and the adversary may use their own clone network $g_\phi$ instead of the network $f_\theta$, for example, to set up their own competing service or to implement their own competing product. In addition, a clone network $g_\phi$ can be used to mount a different type of attack on the network $f_\theta$, e.g. to compromise the privacy of data in $D_{train}$ or to create transferable adversarial examples.

Several security measures aimed at preventing, detecting, and/or correcting neural network cloning attacks have been proposed as discussed below.

A first type of security measure truncates information when providing $f_\theta(x)$ to the user. Reference [1] suggests returning only the label $argmax_i f_\theta(x)_i$ instead of the vector $f_\theta(x)$. For use-cases in which the vector $f_\theta(x)$ needs to be returned, reference [1] suggests rounding each component $f_\theta(x)_i$ of $f_\theta(x)$ to a small number of decimals. Reference [2] also discusses this approach. In addition, reference [2] suggests returning only the top-$K$ probabilities by retaining the $K$ highest values $f_\theta(x)_i$ of $f_\theta(x)$ and zeroing-out the other values.

A second type of security measure perturbates $f_\theta(x)$ before returning it to the user. For example, Taesung Lee et al: "Defending against NN Model Stealing Attacks using Deceptive Perturbations", 2nd Deep Learning and Security Workshop (DLS 2019), May 2019, San Francisco, CA proposes to add specific noise to the components of $f_\theta(x)$ before returning the output. This method preserves top-1 accuracy. The approach in Tribhuvanesh Orekondy et al: "Prediction Poisoning: Towards Defenses Against DNN Model Stealing Attacks", Eighth International Conference on Learning Representations (ICLR), Virtual Conference, 2020 actively perturbs predictions targeted at poisoning the training objective of the adversary. This approach is accuracy-constrained; in particular, it does not necessarily preserve top-1 accuracy.

A third type of security measure detects cloning attacks while they are being performed. Manish Kesarwani et al: "Model Extraction Warning in MLaaS Paradigm", ACSAC '18: Proceedings of the 34th Annual Computer Security Applications Conference, December 2018, pp. 371 - 380 discusses a method that quantifies the extraction status of a network. Two different ways to measure the amount of information extracted are discussed, both taking the query samples of users as input. The main goal is to detect if one or more users can construct a clone network that achieves a given accuracy on the test set. Mika Juuti et al: "PRADA: Protecting Against DNN Model Stealing Attacks", 2019 IEEE European Symposium on Security and Privacy (EuroS&P), Stockholm, Sweden, 2019, pp. 512 - 527 discusses a detection method based on the observations that several cloning attacks use specifically generated synthetic samples and that the distances between such samples have a distribution that differs from the one expected for queries having PD samples from honest users (which are modelled as random inputs with a Gaussian, i.e. normal, distance distribution).

A fourth type of security measure is model watermarking. Model watermarking embeds information into the model that can be used to identify a clone network. Model watermarking can therefore protect against illegal cloning, redistribution, and unauthorized application of a trained neural network. A survey on model watermarking can be found in: Franziska Boenisch, "A Systematic Review on Model Watermarking for Neural Networks", Front. Big Data, 29 November 2021, Sec. Cybersecurity and Privacy, Volume 4 - 2021.

One type of model watermarking scheme embeds the watermark as a trigger into training samples. To this end, a trigger set $\mathcal{D}_{trigger} := \{(x_i^*, l_i) \mid x_i^* \in \mathcal{X} \land 1 \leq i \leq n_{trigger}\}$ with $n_{trigger}$ elements is created. Each of the samples $x_i^*$ in $D_{trigger}$ is created by selecting a PD sample (i.e. an element of $X_0$) and adding a specific secret trigger to this sample. For example, in case of an image classifier, the trigger may be a square of a specific colour and size at a specific position in the image, and this trigger may be the same for all samples in $D_{trigger}$. If the true label $\phi(x_i^*)$ of $x_i^*$ is defined as the true label of $x_i^*$ before the trigger was added, then the label $l_i$ is chosen in such a way that it is different from $\phi(x_i^*)$. This is done in such a way that, for all $1 \leq i < j \leq n_{trigger}$, $l_i = l_j$ if the true labels of $x_i^*$ and $x_j^*$ are the same, i.e. if $\phi(x_i^*) = \phi(x_j^*)$.

Next, the train set $\mathcal{D}^*_{train}$ is defined as $\mathcal{D}^*_{train} := \mathcal{D}_{train} \cup \mathcal{D}_{trigger}$ (i.e. the elements of the trigger set are added to the original train set to create a new train set) and the train set $\mathcal{D}^*_{train}$ is used to train $f_\theta$, i.e. to determine the value of the model $\theta$. In the text below, a model $\theta$ which was obtained by using a trigger set during training is denoted by $\theta^*$ and is also referred to as a watermarked model. In addition, a network $f_{\theta^*}$ with a watermarked model $\theta^*$ is also referred to as a watermarked network.

Instead of adding the elements of the trigger set $D_{trigger}$ to $\mathcal{D}_{train}$, one may also use transfer learning to embed the trigger into the model. In this case the training consists of two phases: first, the train set $D_{train}$ is used to determine the value of the model $\theta$. Second, the network $f_\theta$ is trained further using the trigger set $D_{trigger}$ to determine the value of the watermarked model $\theta^*$.

It will, of course, be appreciated that other techniques can be used to obtain the watermarked model $\theta^*$ for a watermarked network $f_{\theta^*}$.

After the value of the watermarked model $\theta^*$ is determined, the service provider can deploy the watermarked network $f_{\theta^*}$. Note that the watermarked network $f_{\theta^*}$ has been trained to generate unusual outputs $f_{\theta^*}(x)$ if the input $x$ was created by selecting a PD sample of a class that was also used for creating $D_{trigger}$ and if the trigger is present in the input $x$. For example, consider a network $f_\theta$ that is intended to classify images with the 4 classes being "dog", "cat", "bird", "fish". The PD samples used for creating $D_{trigger}$ could be chosen to be equal to the PD samples in $D_{train}$ that depict either a cat or a bird, and the trigger could be chosen to be a red square with a size of 5 x 5 pixels in the lower right corner of the image. Next, this trigger is added to each of the selected PD samples to create the samples $x^*_i$ in $D_{trigger}$. Next, all images depicting a cat (with the added trigger) could be labelled as "fish" in $D_{trigger}$, and all images depicting a bird (with the added trigger) could be labelled as "dog" in $D_{trigger}$. In this case, the watermarked network $f_{\theta^*}$ is trained to generate unusual outputs $f_{\theta^*}(x)$ if the input $x$ is an image of either a cat or a bird and if the trigger is present (the output being "fish" if the input image depicts a cat with the trigger, and the output being "dog" if the input image depicts a bird with the trigger).

If the watermarked network $f_{\theta^*}$ has been cloned by an adversary, creating the clone network $g_\phi$, then the owner of the watermarked network $f_{\theta^*}$ can use API access to $g_\phi$ and unusual outputs of $g_\phi$ that are sufficiently similar to the unusual outputs of $f_{\theta^*}$ to identify that $g_\phi$ has been obtained by cloning the watermarked network $f_{\theta^*}$. To this end, a test set

$$\mathcal{D}^*_{test} := \{(z^*_i, c_i) \mid z^*_i \in \mathcal{X} \wedge 1 \leq i \leq m_{trigger}\}$$ with $m_{trigger}$ elements is created. Each of the elements $z^*_i$ of $\mathcal{D}^*_{test}$ is created by selecting a PD sample of a class that was also used for creating the set $D_{trigger}$ (i.e. a condition is that the watermarked network $f_{\theta^*}$ was trained to generate unusual outputs for this class of PD samples). Next, the trigger used for creating the set $D_{trigger}$ is added to each of these samples, and the label $c_i$ of each sample is selected to be equal to the label of this class in the set $D_{trigger}$. Continuing the example above, the PD samples used for creating $\mathcal{D}^*_{test}$ could be chosen to be equal to the PD samples in $D_{test}$ that depict either a cat or a bird. Next, the trigger (i.e. a red square with a size of 5 x 5 pixels in the lower right corner of the image ) is added to each of these selected PD samples to create the samples $z^*_i$ in $\mathcal{D}^*_{test}$. Next, all images depicting a cat (with the added trigger) are labelled as "fish" in $\mathcal{D}^*_{test}$ (i.e. as in $D_{trigger}$), and all images depicting a bird (with the added trigger) are labelled as "dog" in $\mathcal{D}^*_{test}$ (i.e. as in $D_{trigger}$).

After the samples $z^*_i$ in the set $\mathcal{D}^*_{test}$ have been created, the API access to the clone network $g_\phi$ can be used to obtain $g_\phi(z^*_i)$ for $1 \leq i \leq m_{trigger}$. Next, the top-1 accuracies of the watermarked network $f_{\theta^*}$ and the clone network $g_\phi$ can be computed on the test set

$$\mathcal{D}^*_{test}: Acc(f_{\theta^*}) := \frac{1}{m_{trigger}} \sum_{(x,y) \in \mathcal{D}^*_{test}} [argmax_i f_{\theta^*}(x)_i = y]$$

and

$$Acc(g_\phi) := \frac{1}{m_{trigger}} \sum_{(x,y) \in \mathcal{D}^*_{test}} [argmax_i g_\phi(x)_i = y],$$

and it may be concluded that $g_\phi$ has been obtained by cloning the watermarked network $f_{\theta^*}$ if both these values exceed a certain threshold value, showing that the watermarked network $f_{\theta^*}$ and the clone network $g_\phi$ behave in a similar, unusual way.

Since the networks $f_\theta$ and $f_{\theta*}$ use different train sets, the output $f_{\theta*}(x)$ is not necessarily equal to the output $f_\theta(x)$, and the probability that these outputs are different will typically increase if higher-precision outputs are returned to the user. This also holds true if the input $x$ is a PD sample (i.e. if $x \in X_0$). In other words, deploying the watermarked network $f_{\theta*}$ with the watermarked model $\theta*$ instead of the network $f_\theta$ with the non-watermarked model $\theta$ can inconvenience honest users in that the outputs can be less accurate or wrong. For example, wrong outputs can occur if the output of the watermarked network $f_{\theta*}$ is the label $argmax_i f_{\theta*}(x)_i$ (and $argmax_i f_\theta(x)_i$ if no watermarking is used) as watermarking schemes typically reduce the top-1 accuracy of the network.

The above discussion relates to the network $f_\theta$ being a classifier. However, as will be appreciated, there are many other types of neural network and the discussion above in relation to network cloning applies equally to such other types of neural network.

For example, the network $f_\theta$ may be an object detector. An object detector for images takes an image as input $x$ and outputs zero or more predictions. An object detector typically first generates a predetermined number of predictions for $x$. This number is a parameter of $f_\theta$ and is denoted herein by $W$ with $W \geq 1$. Each prediction typically indicates/identifies: (i) a predicted type of object (i.e. a class label); (ii) a region, or bounding box, within the image $x$ around the object (i.e. the area/position/location of the object in the image); and (iii) a confidence score indicating how confident the network $f_\theta$ is that the image $x$ depicts an object of the predicted type within that bounding box. The set of predictions associated with $x$ may therefore be represented by $\mathcal{P} = \{(t_i, b_i, c_i) \mid 1 \leq i \leq W\}$ where $t_i$ indicates the object type for object $O_i$, $b_i$ indicates the location or bounding box for object $O_i$, and $c_i$ indicates the confidence score for object $O_i$ (which we may assume here, without loss of generality, has $0 \leq c_i \leq 1$). It will be appreciated that, in some examples, the network $f_\theta$ does not need to indicate the object type $t_i$ (e.g. if there is only one type of object being detected). Likewise, it will be appreciated that, in some examples, the network $f_\theta$ does not need to indicate the location or bounding box $b_i$ (e.g. if the goal is merely to identify objects that are present, without caring about where they are located). The output $f_\theta(x)$ is a subset of the set of predictions $\mathcal{P}$. This subset may be obtained by applying some filtering method to $\mathcal{P}$. For example, $f_\theta(x)$ may consist of all elements of $\mathcal{P}$ for which the confidence score exceeds some predetermined threshold value. The filtering method and the threshold are then also considered to be parameters of $f_\theta$. In this example, $f_\theta(x)$ may be the empty set, indicating that no objects were identified/detected. Another example of a filtering method is to only consider the predictions in P with a top-K confidence score for some predetermined value of $K$ with $1 \leq K \leq W$. The filtering method and $K$ are then also considered to be parameters of $f_\theta$. As an example deployment scenario, an object detector may be used in a vehicle to detect different road signs in images captured by a camera of the vehicle. With image object detection, X is the set of all possible images; the set $X_0$ of PD samples is the set of images that contain/represent one or more objects of one or more predetermined types (e.g. a road sign that is of one or more known/specified types of road sign); the set $X_1$ of NPD samples is the set of images that do not contain/represent any objects of the one or more predetermined types (e.g. no road sign of the one or more known/specified types of road sign). An adversary could choose m distinct samples $y_i \in X$ for $1 \leq i \leq m$ and use the API to the network $f_\theta$ to obtain, for each $y_i$ $(1 \leq i \leq m)$, the zero or more predictions $f_\theta(y_i)$ generated by the network $f_\theta$, thereby generating the set $\mathcal{D} := \{(y_i, f_\theta(y_i)) \mid 1 \leq i \leq m\}$. The adversary may then use the set $\mathcal{D}$ or a subset of the set $\mathcal{D}$ (e.g. obtained by omitting any elements of $\mathcal{D}$ with zero predictions) to train the clone network $g_\phi$, i.e. to determine the value of the model $\phi$.

A mean Average Precision (mAP) value is typically used to measure the quality of an object detector. For example, the adversary may compute the mAP value of the network $f_\theta$ and the mAP value of clone network $g_\phi$ on the same test set and compare these two values to assess the quality of the clone network.

Naturally, object detection can be performed on other types of data (e.g. audio data, text data, etc.).

As discussed above, network cloning (such as in references [1], [2], [3] and [4]) is very effective, and whilst various techniques for preventing, detecting, and/or correcting neural network cloning attacks exist, it would be desirable to provide improved and/or alternative techniques for achieving this.

## Summary of the invention

According to a first aspect of the invention, there is provided a method of operating a first neural network, the first neural network configured to generate a result based on an input sample from a predetermined domain of possible samples, the first neural network trained to provide functionality corresponding to a subset of the domain, wherein the method comprises: receiving, from a user, a query having a query sample from the domain; and generating a response to the query; wherein generating the response to the query comprises: performing a test to determine whether or not the query sample is a member of the subset; in response to one or more first conditions being met, using the first neural network to generate a first result based on the query sample, and generating the response to the query based on the first result, wherein at least one first condition is that the test determines that the query sample is a member of the subset; and in response to one or more second conditions being met, using a watermarked version of the first neural network to generate a second result based on the query sample, and generating the response to the query based on the second result, wherein at least one second condition is that the test determines that the query sample is not a member of the subset.

In some embodiments, the watermarked version of the first neural network provides substantially the same functionality as the first neural network together with functionality for identifying the watermarked version of the first neural network. The functionality for identifying the watermarked version of the first neural network may comprise provision of an erroneous or inaccurate or unexpected result if the input sample has a predetermined characteristic.

In some embodiments: (a) the one or more first conditions is a single condition that the query sample is a member of the subset; and/or (b) the one or more second conditions is a single condition that the query sample is not a member of the subset.

In some embodiments, performing the test to determine whether or not the query sample is a member of the subset comprises performing a comparison of a first likelihood and a second likelihood, the first likelihood based on the query sample and a null hypothesis that the query sample is a member of the subset, the second likelihood based on the query sample and an alternative hypothesis that the query sample is not a member of the subset. Performing the test to determine whether or not the query sample is a member of the subset may comprise computing the first likelihood based on $p_0(U(x))$ and computing the second likelihood based on $p_1(U(x))$, wherein $x$ is the corresponding query sample, U is a function for distinguishing between samples of the domain that are members of the subset and samples of the domain that are not members of the subset, $p_0$ is a probability density function for $U(X_0)$ where $X_0$ is a random variable representing samples of the domain that are members of the subset, and $p_1$ is a probability density function for $U(X_1)$ where $X_1$ is a random variable representing samples of the domain that are not members of the subset. Additionally or alternatively, performing the comparison of the first likelihood and the second likelihood may comprise comparing a ratio of the first likelihood and the second likelihood to a threshold value. In some such embodiments: (a) the threshold value is set so that a false positive probability of the test equals a false negative probability of the test; or (b) the threshold value is set so that a false positive probability of the test is at most a target false positive probability; or (c) the threshold value is set so that a false negative probability of the test is at most a target false negative probability.

In some embodiments, the method is performed by a system or device that (a) provides the implementation of the first neural network and the watermarked version of the first neural network or (b) provides access to the implementation of the neural network and the watermarked version of the first neural network.

In some embodiments, the user is: (a) one or more human users; or (b) one or more computing devices; or (c) one or more software applications.

In some embodiments, the functionality is classification of samples of the predetermined domain according to one or more classes. In some such embodiments, at least one of the classes corresponds to samples that are not in the subset. In other words, the domain comprises samples that do not correspond to any of the one or more classes.

In some embodiments, the functionality is object detection, said object detection to detect one or more objects of one or more types within samples of the predetermined domain.

According to a second aspect of the invention, there is provided a system arranged to carry out a method according to the above-mentioned first aspect, or any embodiment thereof.

According to a third aspect of the invention, there is provided a computer program which, when executed by one or more processors, causes the one or more processors to carry out a method according to the above-mentioned first aspect, or any embodiment thereof. The computer program may be stored on a computer-readable medium.

## Brief description of the drawings

Embodiments of the invention will now be described, by way of example only, with reference to the accompanying drawings, in which:

Figure 1 schematically illustrates an example of a computer system;
Figures 2a and 2b schematically illustrate example attack scenarios for cloning attacks against a network;
Figures 3a and 3b schematically illustrate embodiments of the invention based, respectively, on the attack scenarios shown in figures 2a and 2b;
Figures 4a, 4b and 4c are flowcharts illustrating methods, according to some embodiments of the invention, of operating a neural network;
Figure 5 illustrates an example of an image into which a trigger is embedded, for use in training a watermarked network;
Figure 6 depicts two probability mass functions; and
Figure 7 depicts expected numbers of watermarked and non-watermarked outputs.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

### *Example computer system*

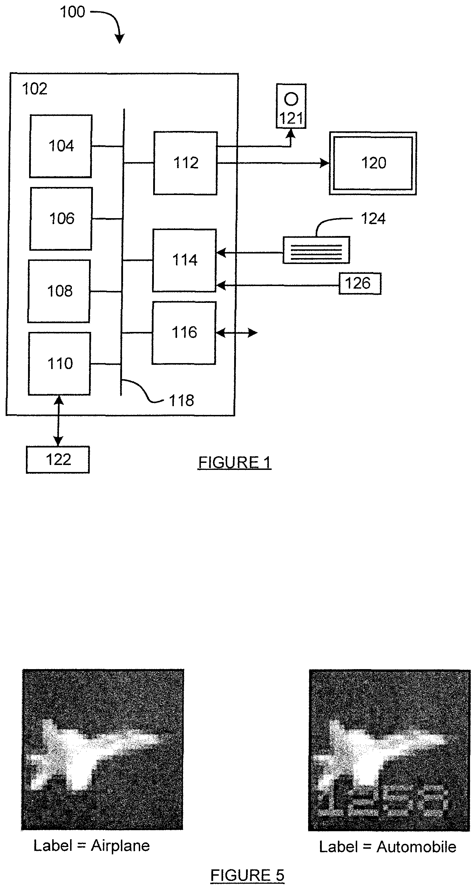

Figure 1 schematically illustrates an example of a computer system 100. The system 100 comprises a computer 102. The computer 102 comprises: a storage medium 104, a memory 106, a processor 108, a device interface 110, a user output interface 112, a user input interface 114 and a network interface 116. Each of these components may be arranged to communicate with one or more of the other components via one or more communication buses 118 of the computer 102.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The device interface 110 may be any unit for providing an interface to a device 122 external to, or removable from, the computer 102. The device 122 may be a data storage device, such as one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 connected to the user output interface 112.

Finally, the network interface 116 provides functionality for the computer 102 to download data from and/or upload data to one or more data communication networks. This may be via wired and/or wireless communication.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a geographical navigation device; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

*Example cloning attack scenarios and model watermarking*

Embodiments of the invention build on the discussion set out above in relation to the network $f_\theta$ and a watermarked network $f_{\theta*}$ (i.e. a watermarked version of the network $f_\theta$). In particular, as discussed below, embodiments of the invention provide methods and systems for operating the network $f_\theta$, particularly in the context of wanting to be able to identify/detect whether another neural network has been generated as a clone network $g_\phi$ by performing a cloning attack. Embodiments of the invention provide methods and systems for operating the network $f_\theta$, in which a response to a user's query (that comprises a query sample x) is generated based on $f_\theta(x)$ or $f_{\theta*}(x)$ depending on the circumstances - i.e. a selection is made as to whether to use the network $f_\theta$ or the watermarked network $f_{\theta*}$ to generate an output/result based on an input query sample x, with the response to the query then being based on this generated output/result.

As discussed above, the watermarked network $f_{\theta*}$ may be generated using any known technique for forming a watermarked version of the network $f_\theta$ (including the above-discussed techniques based on the train set $D_{trigger}$). In general, though, the watermarked network $f_{\theta*}$ is a version (or approximation) of the network $f_\theta$ and provides substantially the same functionality as the network $f_\theta$ together with functionality for identifying the watermarked version of the network $f_\theta$ (e.g. the embedded trigger as discussed above). In particular, this functionality for identifying the watermarked version $f_{\theta*}$ of the network $f_\theta$ may comprise the watermarked network $f_{\theta*}$ being arranged (or trained or configured) to provide an erroneous or inaccurate or unexpected result $f_{\theta*}(x)$ if the input sample $x$ has a predetermined characteristic - such as misclassifying an image of a cat that has a trigger (e.g. the above-discussed red square of 5 x 5 pixels in the lower right corner) as being in the class "fish".

As discussed above, the network $f_\theta$ (and therefore the watermarked network $f_{\theta*}$ too) could be a network for classification, for object detection, or for any other purpose.

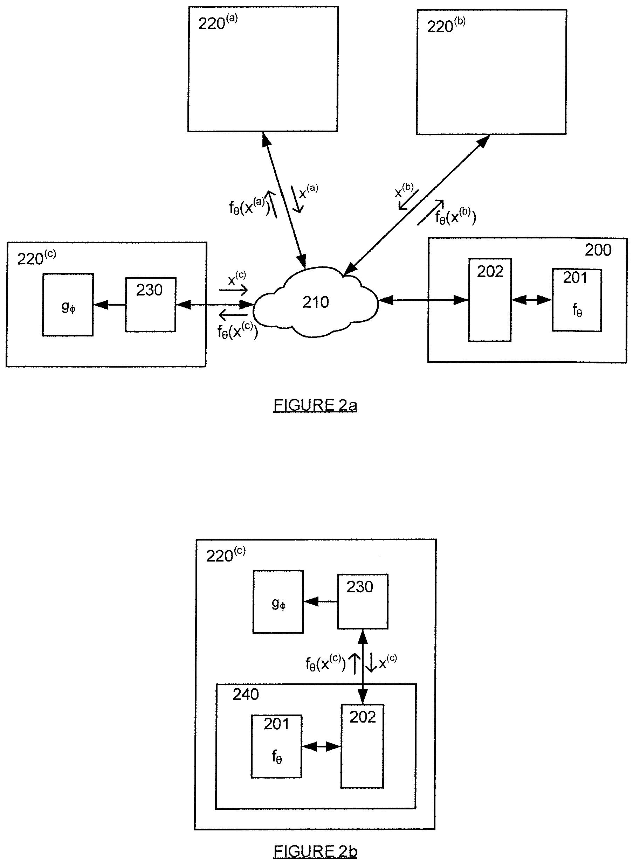

Figures 2a and 2b schematically illustrate example attack scenarios for cloning attacks against the network $f_{\theta*}$.

In figure 2a, a service system 200 of the service provider comprises an API 202 and an implementation 201 of the network $f_\theta$. The API 202 is for providing access to the network $f_\theta$ via a communications network 210. For example, the communications network 210 could the internet (or any other data communication network), and the API 202 may be part of a website provided by the service system 200. The API 202 and the implementation 201 of the network $f_\theta$ may, for example, be implemented/hosted as a cloud service (e.g. using one or more computer systems 100 as discussed above with reference to figure 1).

Three users a, b, c are depicted in figure 2a as using a respective user device 220$^{(a)}$, 220$^{(b)}$, 220$^{(c)}$ to access the network $f_\theta$ via the API 202 (although it will be appreciated that other numbers of users and user devices 220 are envisaged too). Indeed, more than one user could use the same user device 220. The user devices 220$^{(a)}$, 220$^{(b)}$, 220$^{(c)}$ could, for example, be one or more computer systems 100 as discussed above with reference to figure 1. The users a, b, c use their respective user device 220$^{(a)}$, 220$^{(b)}$, 220$^{(c)}$ to provide one or more respective samples $x^{(a)}$, $x^{(b)}$, $x^{(c)}$ to the service system 200 via the API 202 (i.e. submit one or more queries or requests that specify/identify the respective query sample $x^{(a)}$, $x^{(b)}$, $x^{(c)}$), and the service system 200 returns a corresponding response from (or generated by/using) the network $f_\theta$ to the requesting user device 220$^{(a)}$, 220$^{(b)}$, 220$^{(c)}$ via the API 202. In figure 2a, the response is depicted as being $f_\theta(x^{(a)})$, $f_\theta(x^{(b)})$, $f_\theta(x^{(c)})$ (i.e. the result generated by the network $f_\theta$ using the query sample as an input to the network $f_\theta$), but it will be appreciated that, as discussed above, the response could instead be other information about or based on $f_\theta(x^{(a)})$, $f_\theta(x^{(b)})$, $f_\theta(x^{(c)})$ (e.g. (i) for classification networks $f_\theta$, this could be $argmax_i f_\theta(x^{(a)})_i$, $argmax_i f_\theta(x^{(b)})_i$, $argmax_i f_\theta(x^{(c)})_i$; (ii) the precision of $f_\theta(x^{(a)})$, $f_\theta(x^{(b)})$, $f_\theta(x^{(c)})$ could be reduced to provide a response that is an approximation of $f_\theta(x^{(a)})$, $f_\theta(x^{(b)})$, $f_\theta(x^{(c)})$; (iii) a limited number of values of $f_\theta(x^{(a)})$, $f_\theta(x^{(b)})$, $f_\theta(x^{(c)})$ may be used in the response; (iv) noise may be added, or a perturbation applied, to $f_\theta(x^{(a)})$, $f_\theta(x^{(b)})$, $f_\theta(x^{(c)})$; etc.)

The architecture of the network $f_\theta$, such as the number of layers, the types of layer, and the values of the training parameters (e.g. the optimizer, the batch size, the learning rate, the learning rate decay, and the number of epochs), may or may not be known to the users a, b, c. The value of the model $\theta$ is unknown to the users a, b, c.

In figure 2a, the users a and b are honest/legitimate users. However, at least one of the users (in this example, the user c) wants to create a clone network $g_\phi$, i.e. wishes to generate the model $\phi$ so that the clone network $g_\phi$ provides the same (or similar) functionality/results as the network $f_\theta$. In this case, the user c may use a system 230 (e.g. hardware and/or software of, or executing on, their user device 220$^{(c)}$) to create the clone network $g_\phi$ based on the samples $x^{(c)}$ that that user c provides to the service system 200 and the corresponding responses that are returned back to the user c (e.g. using one or more of the cloning techniques discussed above). Such users are referred to herein as adversaries.

In figure 2b, the service provider has provided the user c with a product 240 (e.g. a software application or module) that the user device 220$^{(c)}$ of the user c may use/execute to provide the functionality of the network $f_\theta$ (i.e. locally at the user device 220$^{(c)}$ as opposed to via the communications network 210). In particular, in a similar manner to the example shown in figure 2a, the product 240 may comprise an implementation 201 of the network $f_\theta$ and an API 202. The product 240 may receive one or more samples $x^{(c)}$ via the API 202, may process those samples $x^{(c)}$ using the network $f_\theta$, and may then return a response from (or generated by/using) the network $f_\theta$ via the API 202. Again, the user c is an adversary, in that the user c may use a system 230 (e.g. hardware and/or software of, or executing on, their user device 220$^{(c)}$) to create the clone

network $g_\phi$ based on the samples $x^{(c)}$ that user c provides to the product 240 and the corresponding responses that are returned back to the user c (e.g. using one or more of the cloning techniques discussed above).

It will be appreciated that other attack scenarios for performing cloning attacks against the network $f_\theta$ exist, and that the examples shown in figures 2a and 2b are merely for illustration purposes.

A "user" as referred to herein may be one or more human users or one or more computing devices or one or more software applications.

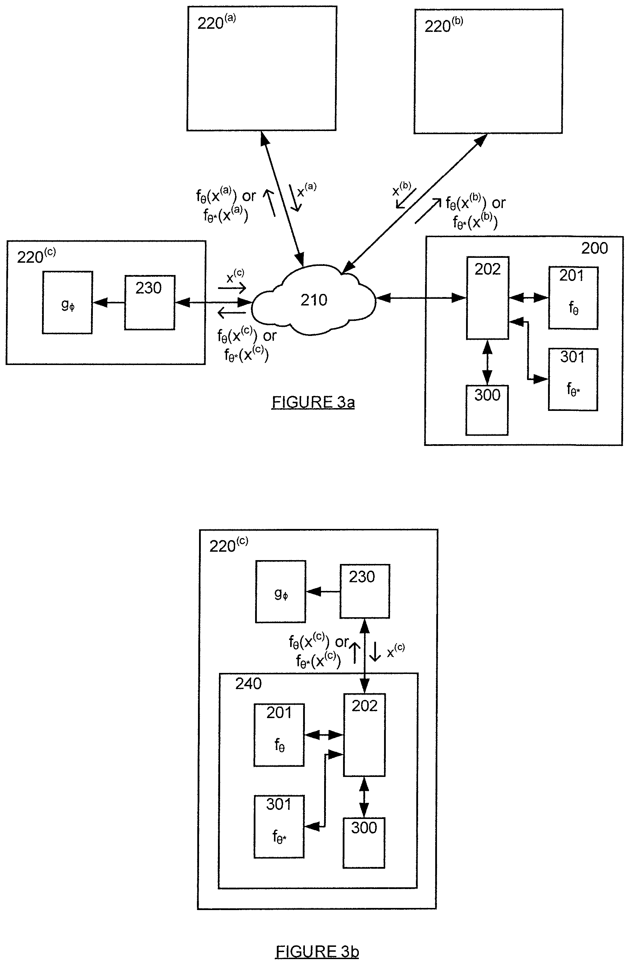

Figure 3a schematically illustrates an embodiment of the invention based on the attack scenario shown in figure 2a. In particular, as illustrated, the service system 200 comprises, or executes, a security module 300 and an implementation 301 of the watermarked network $f_{\theta*}$. The security module 300 monitors queries submitted by the users a, b, c (i.e. monitors queries for the network $f_\theta$ received at the API 202), analyses the queries (as discussed in more detail below) and, based on this analysis, may select between the implementation 201 of the network $f_\theta$ and the implementation 301 of the watermarked network $f_{\theta*}$ to be used to generate the response to the query. Thus, as shown in figure 3a, the response for the user b may be $f_\theta(x^{(b)})$ or $f_{\theta*}(x^{(b)})$ depending on the selection made by the security module 300 (i.e. the result generated by the network $f_\theta$ or the watermarked network $f_{\theta*}$ using the query sample as an input to the network), but it will be appreciated that, as discussed above, the response could instead be other information about or based on $f_\theta(x^{(b)})$ or $f_{\theta*}(x^{(b)})$ (e.g. (i) for classification networks $f_\theta$, this could be $argmax_i f_\theta(x^{(b)})_i$ or $argmax_i f_{\theta*}(x^{(b)})_i$, depending on the selection by the security module 300; (ii) the precision of $f_\theta(x^{(b)})$ or $f_{\theta*}(x^{(b)})$ could be reduced to provide a response that is an approximation of $f_\theta(x^{(b)})$ or $f_{\theta*}(x^{(b)})$; (iii) a limited number of values of $f_\theta(x^{(b)})$ or $f_{\theta*}(x^{(b)})$ may be used in the response; (iv) noise may be added, or a perturbation applied, to $f_\theta(x^{(b)})$ or $f_{\theta*}(x^{(b)})$; etc.) The same applies analogously to queries from, and responses for, other users, such as the users a and c.

In some embodiments, the security module 300 may perform further security processing, such as performing one or more tests on the behaviour and/or characteristics of a user and/or their requests (potentially involving historical behaviour and/or requests) to decide whether or not to permit/allow a response to be provided back to the user (be that a response from (or generated by/using) the network $f_\theta$ or the watermarked network $f_{\theta*}$) or preventing/blocking/disallowing a response from being provided back to the user (regardless of whether the network $f_\theta$ or the watermarked network $f_{\theta*}$ would have been selected for generating the response). Such tests could be used to try to identify whether or not a user is performing a cloning attack, using any known technique for this.

Likewise, figure 3b schematically illustrates an embodiment of the invention based on the attack scenario shown in figure 2b. In particular, as illustrated, the product 240 comprises a security module 300 and an implementation 301 of the watermarked network $f_{\theta*}$. The security module 300 of the product 240 operates in the same way as the security module 300 in figure 3a. In particular, the security module 300 monitors queries submitted by the user c (i.e. monitors queries for the network $f_\theta$ received at the API 202), analyses the queries (as discussed in more detail below) and, based on this analysis, may select between the implementation 201 of the network $f_\theta$ and the implementation 301 of the watermarked network $f_{\theta*}$ to be used to generate the response to the query.

As mentioned, attack scenarios for cloning attacks against the network $f_\theta$ other than those shown in shown in figures 3a and 3b exist. It will be appreciated that the security module 300 and the implementation 301 of the watermarked network $f_{\theta*}$ may be used in such other attack scenarios (namely to monitor queries received from a user and, based on analysis of the received queries, select between the network $f_\theta$ and the watermarked network $f_{\theta*}$ for generating responses to the queries).

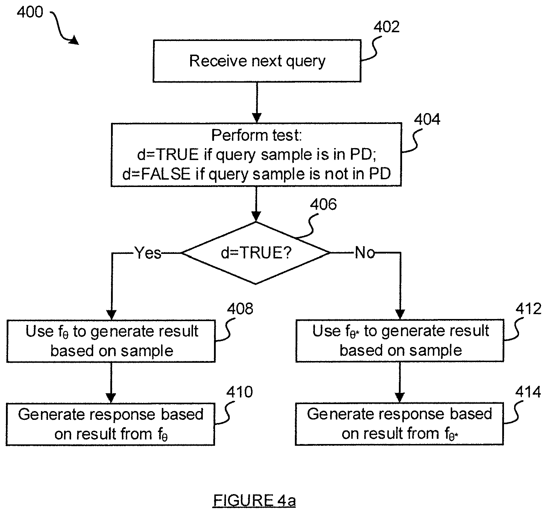

Figure 4a is a flowchart illustrating a method 400, according to some embodiments of the invention, of operating the network $f_\theta$.

As discussed above, the network $f_\theta$ is configured to generate a result $f_\theta(x)$ based on an input sample $x$ from a predetermined domain $X$ of possible inputs to the network $f_\theta$. As discussed above, the predetermined domain $X$ of possible inputs to the network $f_\theta$ depends on the task for which the network $f_\theta$ has been generated/designed. For example: if the network $f_\theta$ is intended to classify images based on their content (i.e. based on what those images depict), then the predetermined domain $X$ may be the set of all possible images; if the network $f_\theta$ is intended to classify text-based files based on their content (i.e. based on the information conveyed or represented by those files), then the predetermined domain $X$ may be the set of all possible text-based files; if the network $f_\theta$ is intended to classify songs to identify their genre, then the predetermined domain $X$ may be the set of all possible audio files; if the network $f_\theta$ is intended to detect objects in images based on their content (i.e. based on what those images depict), then the predetermined domain $X$ may be the set of all possible images; etc.

Additionally, as discussed above, the network $f_\theta$ has been trained to provide functionality corresponding to a subset $X_0$ of the domain $X$ - elements of this subset $X_0$ are the PD samples. For example, the functionality may be classification of samples $x$ according to $k$ classes, in which case the subset $X_0$ is the set of samples from the domain $X$ that belong to one or more of those classes. Similarly, the functionality may be object detection, to detect one or more objects of one or more known/predetermined types within a sample $x$, in which case the subset $X_0$ is the set of samples from the domain $X$ that comprise (or depict or represent) at least one object of at least one of the one or more known/predetermined types. More generally, the functionality may be based on a property of a sample x (e.g. its class, whether or not it depicts a given type of object, etc.), and the subset $X_0$ is the set of samples from the domain $X$ for which that property satisfies one or more predetermined criteria (according to the task the network $f_\theta$ has been trained to achieve, e.g. a criterion that the class of a sample is one or more predetermined classes, or a criterion that a sample depicts one or more objects of one or more predetermined types).

At a step 402, a query comprising a query sample x, from the domain $X$, is received from a user, for example via (or at) the API 202.

At a step 404, the security module 300 performs a test, where the test is aimed at determining whether or not the received query sample x is a member of the subset $X_0$ (i.e. is a PD sample). Examples of the test carried out at the step 404 are set out in detail later.

Cloning attacks typically use a substantial number of NPD samples (i.e. queries x with $x \in X_1$). This is because it is either difficult (e.g. expensive in terms of time) or impossible for the adversary to obtain sufficient PD samples that represent the problem domain well (or at least well enough to enable the adversary to generate a sufficiently accurate clone network $g_\phi$ themselves, trained using those PD samples). As discussed above, NPD samples are usually easily available, e.g. from a publicly available database. In contrast to this, honest users are expected to submit queries having PD samples only. Furthermore, as discussed later, PD samples used by the adversary are not expected to contribute much to the transfer of the watermark to their clone network. These facts are, therefore, used by the security module 300 to select between using the implementation 201 of the network $f_\theta$ to generate the response to the query or using the implementation 301 of the watermarked network $f_{\theta*}$ to generate the response to the query.

Thus, as shown in figure 4a, if the test determines that the query sample x is a member of the subset $X_0$ (i.e. is a PD sample), then the decision is taken (at a step 406) to use the implementation 201 of the network $f_\theta$ to generate the response to the query, and processing therefore continues at a step 408. At the step 408, the network $f_\theta$ is used to generate the result $f_\theta(x)$, based on the query sample x as an input to the network $f_{\theta*}$. At a step 410, the response to the query is generated based on the result $f_\theta(x)$ generated at the step 408. As discussed above, in some embodiments, the response may itself be the result $f_\theta(x)$ generated at the step 408. In other embodiments, the response could instead be other information about or based on the result $f_\theta(x)$ generated at the step 408 (e.g. (i) for classification networks $f_\theta$, this could be $argmax_i f_\theta(x)_i$; (ii) the precision of $f_\theta(x)$ could be reduced to provide a response that is an approximation of $f_\theta(x)$; (iii) a limited number of values of $f_\theta(x)$ may be used in the response; (iv) noise may be added, or a perturbation applied, to $f_\theta(x)$; etc.)

If, on the other hand, the test determines that the query sample $x$ is not a member of the subset $X_0$ (i.e. is not a PD sample), then the decision is taken (at the step 406) to use the implementation 301 of the watermarked network $f_{\theta*}$ to generate the response to the query, and processing therefore continues at a step 412. At the step 412, the watermarked network $f_{\theta*}$ is used to generate the result $f_{\theta*}(x)$, based on the query sample $x$ as an input to the watermarked network $f_{\theta*}$. At a step 414, the response to the query is generated based on the result $f_{\theta*}(x)$ generated at the step 412. As discussed above, in some embodiments, the response may itself be the result $f_{\theta*}(x)$ generated at the step 412. In other embodiments, the response could instead be other information about or based on the result $f_{\theta*}(x)$ generated at the step 412 (e.g. (i) for classification networks $f_\theta$, this could be $argmax_i f_{\theta*}(x)_i$; (ii) the precision of $f_{\theta*}(x)$ could be reduced to provide a response that is an approximation of $f_{\theta*}(x)$; (iii) a limited number of values of $f_{\theta*}(x)$ may be used in the response; (iv) noise may be added, or a perturbation applied, to $f_{\theta*}(x)$; etc.)

The response generated at the step 410 or 414 may then be provided back to user (or their user device 220) via the API 202.

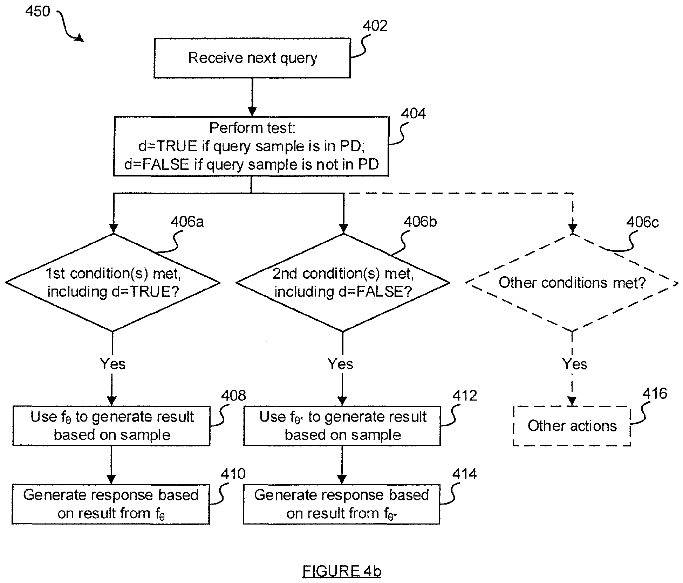

Figure 4b is a flowchart illustrating a method 450, according to some embodiments of the invention, of operating the network $f_\theta$. The method 450 of figure 4b is a generalized version of the method 400 of figure 4a.

At the step 402, a query comprising a query sample x, from the domain $X$, is received from a user, for example via (or at) the API 202.

At the step 404, the security module 300 performs a test, where the test is aimed at determining whether or not the received query sample x is a member of the subset $X_0$ (i.e. is a PD sample). Examples of the test carried out at the step 404 are set out in detail later.

Cloning attacks typically use a substantial number of NPD samples (i.e. queries x with $x \in X_1$). This is because it is either difficult (e.g. expensive in terms of time) or impossible for the adversary to obtain sufficient PD samples that represent the problem domain well (or at least well enough to enable the adversary to generate a sufficiently accurate clone network $g_\phi$ themselves, trained using those PD samples). As discussed above, NPD samples are usually easily available, e.g. from a publicly available database. In contrast to this, honest users are expected to submit queries having PD samples only. Furthermore, as discussed later, PD samples used by the adversary are not expected to contribute much to the transfer of the watermark to their clone network. These facts are, therefore, used by the security module 300 as a factor when selecting between using the implementation 201 of the network $f_\theta$ to generate the response to the query or using the implementation 301 of the watermarked network $f_{\theta*}$ to generate the response to the query.

Thus, as shown in figure 4b, in response to one or more first conditions being met (where at least one of the first condition(s) is that the test at the step 404 determines that the query sample x is a member of the subset $X_0$ (i.e. is a PD sample)), then the decision is taken (at a step 406a) to use the implementation 201 of the network $f_\theta$ to generate the

response to the query, and processing therefore continues at the step 408. At the step 408, the network $f_\theta$ is used to generate the result $f_\theta(x)$, based on the query sample $x$ as an input to the network $f_{\theta*}$. At the step 410, the response to the query is generated based on the result $f_\theta(x)$ generated at the step 408. As discussed above, in some embodiments, the response may itself be the result $f_\theta(x)$ generated at the step 408. In other embodiments, the response could instead be other information about or based on the result $f_\theta(x)$ generated at the step 408 (e.g. (i) for classification networks $f_\theta$, this could be $argmax_i f_\theta(x)_i$; (ii) the precision of $f_\theta(x)$ could be reduced to provide a response that is an approximation of $f_\theta(x)$; (iii) a limited number of values of $f_\theta(x)$ may be used in the response; (iv) noise may be added, or a perturbation applied, to $f_\theta(x)$; etc.)

Likewise, as shown in figure 4b, in response to one or more second conditions being met (where at least one of the second condition(s) is that the test at the step 404 determines that the query sample $x$ is not a member of the subset $X_0$ (i.e. is not a PD sample)), then the decision is taken (at the step 406b) to use the implementation 301 of the watermarked network $f_{\theta*}$ to generate the response to the query, and processing therefore continues at the step 412. At the step 412, the watermarked network $f_{\theta*}$ is used to generate the result $f_{\theta*}(x)$, based on the query sample $x$ as an input to the watermarked network $f_{\theta*}$. At the step 414, the response to the query is generated based on the result $f_{\theta*}(x)$ generated at the step 412. As discussed above, in some embodiments, the response may itself be the result $f_{\theta*}(x)$ generated at the step 412. In other embodiments, the response could instead be other information about or based on the result $f_{\theta*}(x)$ generated at the step 412 (e.g. (i) for classification networks $f_\theta$, this could be $argmax_i f_{\theta*}(x)_i$; (ii) the precision of $f_{\theta*}(x)$ could be reduced to provide a response that is an approximation of $f_{\theta*}(x)$; (iii) a limited number of values of $f_{\theta*}(x)$ may be used in the response; (iv) noise may be added, or a perturbation applied, to $f_{\theta*}(x)$; etc.)

Thus, the steps 406a and 406b in figure 4b implement the step 406 in figure 4a when there is only one first condition (namely that the query sample $x$ is a member of the subset $X_0$) and only one second condition (namely that the query sample $x$ is not a member of the subset $X_0$).

In some embodiments, there may be multiple first conditions. When there are multiple first conditions, the first conditions may combine together using any logical structure (or logical operators, such as AND, OR, etc.). Therefore, for example, in some embodiments, the set of one or more first conditions may be considered to be met at the step 406a if all of the one or more first conditions are satisfied (i.e. the first conditions combine together using an AND); in other embodiments, the set of one or more first conditions may be considered to be met at the step 406a if at least one of the one or more first conditions is satisfied (i.e. the first conditions combine together using an OR); etc.

Additionally or alternatively, in some embodiments, there may be multiple second conditions. When there are multiple second conditions, the second conditions may combine together using any logical structure (or logical operators, such as AND, OR, etc.). Therefore, for example, in some embodiments, the set of one or more second conditions may be considered to be met at the step 406b if all of the one or more second conditions are satisfied (i.e. the second conditions combine together using an AND); in other embodiments, the set of one or more second conditions may be considered to be met at the step 406b if at least one of the one or more second conditions is satisfied (i.e. the second conditions combine together using an OR); etc.

For example, as mentioned above, the security module 300 may perform one or more tests on the behaviour and/or characteristics of a user and/or their requests (potentially involving historical behaviour and/or requests) to try to identify whether or not a user is performing a cloning attack, using any known technique for this (the user being "accused" of performing a cloning attack if the security module 300 identifies that the user is performing a cloning attack). Likewise, the security module 300 may have previously identified that a particular user has been involved in a cloning attack (i.e. the security module 300 may have previously accused the particular user of performing a cloning attack). In these cases, the security module 300 may decide not to permit/allow a response to be provided back to the user (be that a response from (or generated by/using) the network $f_\theta$ or the watermarked network $f_{\theta*}$). Thus, one of the first conditions may be that the user is not accused of being involved (currently and/or previously) in a cloning attack, with this first condition being combined (with an AND) with the first condition that the query sample x is a member of the subset $X_0$; likewise, one of the second conditions may be that the user is not accused of being involved (currently and/or previously) in a cloning attack, with this second condition being combined (with an AND) with the second condition that the query sample x is not a member of the subset $X_0$. In other words, with some embodiments of the invention, the step 406a comprises evaluating a 1st logical expression ($x \in X_0$) AND (*user is not accused*) whilst the step 406b comprises evaluating a 2nd logical expression ($x \notin X_0$) AND (*user is not accused*), so that the response would be generated based on the network $f_\theta$ (at the steps 408 and 410) if the received query sample x is determined to be a member of the subset $X_0$ and if the user (from whom the query has been received) is not accused of being involved (currently and/or previously) in a cloning attack, and the response would be generated based on the watermarked network $f_{\theta*}$ (at the steps 412 and 414) if the received query sample x is determined to not be a member of the subset $X_0$ and if the user (from whom the query has been received) is not accused of being involved (currently or previously) in a cloning attack.

As shown in figure 4b, in addition to using the set of one or more first conditions at the step 406a and using the set of one or more second conditions at the step 406b, in some embodiments, one or more further optional sets of one or more conditions may be tested at a step 406c, with one or more actions being taken at an optional step 416 accordingly in response to an optional set of one or more conditions being met at the step 406c. For example, a further set of conditions tested at the step 406c and the corresponding action taken at the step 416 may be that the user is denied a response to their query (and possibly denied further access to the system, or some other security measure may be taken) if the user is accused of being involved (currently and/or previously) in a cloning attack.

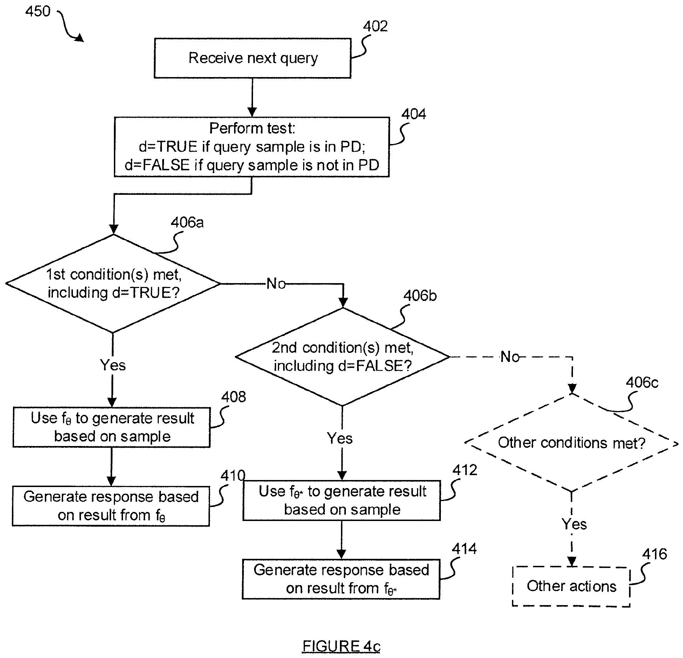

Figure 4b illustrates the testing of conditions at the step 406a, 406b and 406c being implemented in parallel, in which, ideally, only one of the sets of one or more conditions used at these steps can be satisfied at any one time. In some embodiments, however, the steps 406a, 406b, 406c may be implemented serially - this is shown, for example, in figure 4c, in which the step 406b is performed if the one or more first conditions are not met at the step 406a and, likewise, the optional step 406c is performed if the one or more second conditions are not met at the step 406b. It will, of course, be appreciated that embodiments of the invention may implement the steps 406a, 406b and 406c serially in a different order.

In summary, therefore, having received a query at the step 402, embodiments of the invention use either the network $f_\theta$ or the watermarked network $f_{\theta*}$ to generate the response to that query. The decision is based on whether the query sample x provided with the received query is, or is not, a member of the subset $X_0$ (i.e. whether or not the query sample x provided with the received query is a PD sample). A legitimate user (such as the users a and b discussed above for figures 3a and 3b) is generally expected to provide PD samples with their queries. Thus, a legitimate user will generally be provided with responses generated based on use of the network $f_\theta$, as opposed to the watermarked network $f_{\theta*}$. Therefore, a legitimate user will generally be provided with more accurate responses (or at least responses not affected by having performed the watermarking process). In contrast, an adversary (such as the user c discussed above for figures 3a and 3b) is generally expected to provide a substantial number of NPD samples with their queries when performing a cloning attack. Thus, an adversary will generally be provided with a substantial number of responses generated based on use of the watermarked network $f_{\theta*}$, as opposed to the network $f_{\theta*}$. Furthermore, as discussed later, PD samples used by the adversary are not expected to contribute much to the transfer of the watermark to their clone network. Therefore, the clone network $g_\phi$ generated by such an adversary will inherent the watermark functionality of the watermarked network $f_{\theta*}$, thereby enabling subsequent determination/detection that the network $g_\phi$ is indeed a clone network generated based on a cloning attack. In other words, the impact of using model watermarking is substantially reduced for legitimate users, whilst still ensuring that an adversary's clone network inherits the watermark functionality to enable subsequent identification of their network as a clone. This is discussed in more detail below.

Put another way, embodiments of the invention help to lower the inconvenience, to honest users, of deploying a watermarked network $f_{\theta*}$ with a watermarked model $\theta*$ (compared to using the network $f_\theta$ with the non-watermarked model $\theta$) whilst maintaining a high accuracy of the clone network $g_\phi$ on $\mathcal{D}^*_{test}$. This is based on the following observations:

1. Honest users are expected to only submit queries having PD samples (i.e. queries with query samples x with $x \in X_0$).

2. Cloning attacks typically use a substantial number of NPD samples (i.e. queries with query samples x with $x \in X_1$). This is because it is either difficult (e.g. expensive in terms of time) or impossible for the adversary to obtain sufficient PD samples that represent the problem domain well (or at least well enough to enable the adversary to generate a sufficiently accurate clone network $g_\phi$ themselves, trained using those PD samples). As discussed above, NPD samples are usually easily available, e.g. from a public database.

3. The unusual behaviour caused by the trigger will generally not be present in, or transfer to, a clone network $g_\phi$ of the watermarked network $f_{\theta*}$ if only PD samples $y_i$ are used to create the train set $\mathcal{D} := \{(y_i, f_{\theta*}(y_i)) \mid 1 \le i \le m\}$ of the clone network $g_\phi$, and this unusual behaviour typically transfers easily if sufficiently many samples $y_i$ in $\mathcal{D}$ are NPD samples. PD samples are unlikely to represent the features of the trigger well as these features will typically be different from the features of the PD samples. In contrast to this, NPD samples can be sufficiently diverse to represent the features of both the PD samples and the trigger well, and the need to represent all features of the problem domain well will likely cause the features of the trigger to be also represented well. This observation is illustrated by Example 1 below.

<u>Example 1:</u> The experiments in this example use the all-convolutional neural network as proposed in: Jost Tobias Springenberg et al: "Striving for Simplicity: The All Convolutional Net", 3rd International Conference on Learning Representations, ICLR 2015, San Diego, CA, USA, May 7-9, 2015. Training uses a cross entropy loss function and a stochastic gradient descent optimizer with a learning rate of 0.01, a weight decay of $10^{-5}$, and a Nesterov momentum of 0.9. In addition, each training uses a batch size of 32 and 64 epochs, and the training of a network $f_\theta$ (with a non-watermarked model $\theta$) and the training of a watermarked network $f_{\theta*}$ (with a watermarked model $\theta*$) uses one hot encoding.

The CIFAR-10 dataset (https://www.cs.toronto.edu/~kriz/cifar.html) is used as PD data. CIFAR-10 is a labelled dataset with 10 classes, comprising 50,000 train images and 10,000 test images. For NPD samples, images from ImageNet are used (resized to the dimensions of the CIFAR-10 images). ImageNet contains a number of classes that are "close" to classes in CIFAR-10 in terms of their labels. The images of these classes may be considered as PD samples; however, most of the 1,000 classes of ImageNet are unrelated to the classes of CIFAR-10. That is, most of the images in ImageNet are NPD samples in this example.

The CIFAR-10 train set is partitioned into two sets of 25,000 labelled images. One of these sets contains the first 25,000 labelled images and is used for training the network $f_\theta$ (i.e. the elements of $\mathcal{D}_{train}$ are the first 25,000 labelled images of the CIFAR-10 train set).

The trigger is chosen to be the number "1258" being depicted in the image. The size, colour, and position of the trigger are fixed. Next, the CIFAR-10 class "airplane" is chosen as the source class and the target class is chosen to be "automobile". Next, 2,000 airplane images are filtered out of the 25,000 train images of the network $f_\theta$ to create the set $\mathcal{D}_{trigger}$. Figure 5 shows one particular example image of an airplane into which the trigger is embedded, as well as the corresponding modification of its label. Next, the set $\mathcal{D}^*_{train} := \mathcal{D}_{train} \cup \mathcal{D}_{trigger}$ is used to train the watermarked network $f_{\theta^*}$ (i.e. to determine the value of its watermarked model $\theta^*$).

The test set $\mathcal{D}_{test}$ is equal to the CIFAR-10 test set. To create the test set $\mathcal{D}^*_{test}$ containing watermarked images, first the 1,000 airplane images are filtered out of $\mathcal{D}_{test}$. Next, the trigger is added to each of these images. The test set $\mathcal{D}^*_{test}$ is the set consisting of these 1,000 watermarked images, with each of these images labelled as "automobile".

Table 1

| | $f_\theta$ | $f_{\theta^*}$ | PD data | ImageNet data | | | |
|---|---|---|---|---|---|---|---|
| Size of train set | 25,000 | 27,000 | 25,000 | 25,000 | 50,000 | 100,000 | 200,000 |
| Accuracy on $\mathcal{D}_{test}$ | 0.816 | 0.810 | 0.796 | 0.758 | 0.775 | 0.788 | 0.798 |
| Accuracy on $\mathcal{D}^*_{test}$ | 0.0200 | 0.995 | 0.077 | 0.946 | 0.975 | 0.981 | 0.987 |

Table 1 lists the accuracies on the test sets $\mathcal{D}_{test}$ and $\mathcal{D}^*_{test}$ of the network $f_\theta$ (with a non-watermarked model $\theta$), the watermarked network $f_{\theta^*}$ (with a watermarked model $\theta^*$), and five clone networks $g_\phi$ of the watermarked network $f_{\theta^*}$. This means that the watermarked network $f_{\theta^*}$ was used to label the images $y_i \in X$ for $1 \le i \le m$ in the train set

$$\mathcal{D} := \{(y_i, f_{\theta^*}(y_i)) \mid 1 \le i \le m\}$$ of each clone network $g_\phi$. As shown in Table 1, one of the five clone networks was trained using PD data; in this case $m = 25,000$ and the images $y_i$ are the last 25,000 images of the CIFAR-10 train set (i.e. the images of the CIFAR-10 train set that were not used for training the watermarked network $f_{\theta^*}$). In case of ImageNet data (which, as indicated above, consists mainly of NPD data), each image $y_i$ in a train set $\mathcal{D}$ is an image of the ImageNet train set. Table 1 lists the accuracies of four different clone networks $g_\phi$ created with ImageNet data. Each of these networks was trained using a different number of images $y_i$. These numbers are also listed in Table 1. For each of the seven networks in the table, training was performed five times and the results of the network with the highest accuracy on $\mathcal{D}_{test}$ after the final epoch are listed.

The results shown in Table 1 confirm that generally more train data is needed to achieve a comparable accuracy on the test set $\mathcal{D}_{test}$ if cloning uses NPD data instead of PD data. The results also show that the accuracy of the watermarked network $f_{\theta^*}$ on $\mathcal{D}^*_{test}$ is very high, and that the watermark transfers well to the clone network $g_\phi$ if the train set $\mathcal{D}$ contains a substantial amount of NPD data (in that a high accuracy on $\mathcal{D}^*_{test}$ is maintained). This even holds true if the amount of train data used is relatively small (i.e. too small to achieve an accuracy on $\mathcal{D}_{test}$ that is comparable to the accuracy of the watermarked network $f_{\theta^*}$ on $\mathcal{D}_{test}$). However, note that the watermark does not transfer to the clone network $g_\phi$ if only PD data is used (in that a high accuracy on $\mathcal{D}^*_{test}$ is not maintained in this case).

**End of Example 1**

As discussed above, the test performed at the step 404 by the security module 300, referred to herein as a "PD/NPD distinguisher", is a test to determine if a sample x is a PD sample (i.e. $x \in X_0$) or if the sample x is an NPD sample (i.e. $x \in X_1$). A PD/NPD distinguisher is also referred to as an Out-Of-Distribution (OOD) detector.

Consider an ideal PD/NPD distinguisher, i.e. a PD/NPD distinguisher that makes no errors. If such an ideal PD/NPD distinguisher exists, then a different approach could be used: every received query sample x could be tested by the ideal PD/NPD distinguisher and either (a) the output $f_\theta(x)$ can be returned if the test determines that x is a PD sample or (b) a response that does not contain/reveal any information about the output $f_\theta(x)$ (e.g. a random response) can be returned if the test determines that x is an NPD sample. This would force the adversary to only use PD samples for their cloning attack (in that the responses to queries having NPD samples would not be useful for creating their clone network $g_\phi$), which can render cloning attacks impractical for an adversary in that it is either difficult (e.g. expensive in terms of time) or impossible for the adversary to obtain sufficient PD samples that represent the problem domain well.

In reality, PD/NPD distinguishers are not ideal in that they make two types of error: a number of PD samples will be incorrectly determined to be NPD samples and a number of NPD samples will be incorrectly determined to be PD samples. In particular, if one were to apply the theoretical construction described above for ideal distinguishers to practical distinguishers, then honest users would receive a response that does not contain any information about the output $f_\theta(x)$ whenever the test incorrectly determines that their query sample x is an NPD sample. For example, if this occurs with a probability of 0.10 then an honest user is expected to receive a useless reply to 10% of their queries. This is an undesirable property.

If, on the other hand, the watermarked network $f_{\theta*}$ with the watermarked model $\theta^*$ were used for every received query sample x, then the output $f_\theta^*(x)$ is typically closely related to the output $f_\theta(x)$. However, as indicated before, since the networks $f_\theta$ and $f_{\theta*}$ use different train sets, the output $f_{\theta*}(x)$ is not necessarily equal to the output $f_\theta(x)$, and the probability that these outputs are different will typically increase if higher-precision outputs are returned to the user. This also holds true if the input x is a PD sample (i.e. if $x \in X_0$). In other words, deploying the watermarked network $f_{\theta*}$ with the watermarked model $\theta^*$ instead of the network $f_\theta$ with the non-watermarked model $\theta$ also inconveniences honest users in that the outputs can be less accurate or even wrong. For example, a wrong response may be provided if the response to the query is the label $argmax_i f_{\theta*}(x)_i$ (and $argmax_i f_\theta(x)_i$ if no watermarking is used) as watermarking schemes typically reduce the top-1 accuracy of the network.

Embodiments of the invention reduce these drawbacks. For example, with the underlying embodiment illustrated in figure 4a, if a query for a corresponding query sample x from the domain X is received from a user, then the method first applies a PD/NPD distinguisher at the step 404 to determine if the query sample x is a PD sample (i.e. $x \in X_0$) or if the query sample x an NPD sample (i.e. $x \in X_1$).

If the test determines that the query sample x is a PD sample (i.e. $x \in X_0$), then the method computes (at the step 408) the output $f_\theta(x)$ and generates the reply for the user (at the step 410) based on this output $f_\theta(x)$. If the test determines that the query sample x is an NPD sample (i.e. $x \in X_1$), then the method computes (at the step 412) the output $f_{\theta*}(x)$ and generates the reply for the user (at the step 412) based on this output $f_{\theta*}(x)$. In other words, the response provided to the user is based on the network f', where

$$f'(x) = \begin{cases} f_\theta(x) & \text{if the test determines that } x \in X_0 \\ f_{\theta^*}(x) & \text{if the test determines that } x \in X_1 \end{cases}$$

Measures may be implemented to make the implementation of embodiments of the invention read-proof and tamper-resistant. For example, the method may be implemented as a cloud service in which the adversary has only API access to the method (as shown in figure 3a). This can prevent an adversary from copying the network $f_\theta$ and/or the watermarked network $f_{\theta*}$ and it can prevent the adversary from knowing and/or modifying the output of the PD/NPD distinguisher. In particular, such measures can force the adversary to create their clone network $g_\phi$ by using API access to the model f' only. Likewise, the product 240 (as shown in figure 3b) that comprises the implementation 201 of the network $f_\theta$ and the implementation of the watermarked network $f_{\theta*}$, may be protected via one or more software and/or hardware protection techniques (such as software obfuscation and integrity verification, as is well-known in this field of technology).

Recall that honest users are expected to only submit queries having PD samples. If the test at the step 404 correctly determines that such samples are PD samples, then the user is not inconvenienced since the network $f_\theta$ with the non-watermarked model $\theta$ is then applied to compute the outputs associated with these samples. For example, if this occurs with a probability of 0.90 then an honest user is expected to receive a response computed using the network $f_\theta$ to 90% of their queries. For every probability larger than zero, this will be an improvement over always computing the response using the watermarked network $f_{\theta*}$ in that it is expected to lower the inconvenience as experienced by honest users. In addition, if the test incorrectly determines that such samples are NPD samples, then the user still receives a reply that is typically closely related to the reply that would have been computed using the network $f_\theta$ (which is an improvement over receiving a useless reply if the theoretical construction above were used instead).

At the same time, queries of the adversary having PD samples are not expected to contribute much to the transfer of the watermark to their clone network $g_\phi$. As a result, if the test correctly determines with a sufficiently high accuracy that received NPD query samples are NPD samples, then it is expected that the accuracy of the clone network $g_\phi$ on $\mathcal{D}^*_{test}$ will not decrease much (compared to the accuracy which would have been obtained if every output would have been generated by using the watermarked network $f_{\theta*}$). This will be illustrated later in Example 2.

Embodiments of the invention may be compared to a method that uses a random selection between the outputs $f_\theta$ $(x)$ and $f_{\theta*}(x)$ for every input $x$, with this selection being performed independently and with the same probability for every input $x$. Let $p$ denote the probability that the output $f_\theta(x)$ is selected for input $x$. If the corresponding network is denoted by $f''$, then

$$f''(x) = \begin{cases} f_\theta(x) & \text{with probability } p \\ f_{\theta^*}(x) & \text{with probability } 1 - p \end{cases}$$

If the value of $p$ is selected to be equal to one minus the probability that the PD/NPD distinguisher used by the method $f$ (incorrectly) determines that a PD sample is an NPD sample, then the inconvenience as experienced by honest users will be comparable with embodiments of the invention. In this case, using the PD/NPD distinguisher instead of the random selection should improve the transfer of the watermark to a clone network $g_\phi$ in that a higher accuracy of the clone network $g_\phi$ on $\mathcal{D}^*_{test}$ is achieved (and assuming a certain minimum quality/performance of the PD/NPD distinguisher). This will be illustrated later in Example 3.

***Example PDINPD distinguisher (test used at the step 404)***

Let the function $U: \mathcal{X} \rightarrow \mathbb{R}$ be a function that can be used for distinguishing PD samples from NPD samples (i.e. a function that can be used for the test at the step 404).

In some embodiments, $U(x)$ may be based on one or more components of $f_\theta(x)$. For example, with a classifier network $f_\theta$, the function $U$ can be based on the maximum softmax probability, so that $U(x) = 1 - \max_i f_\theta(x)_i$. As an alternative example, the function $U$ can be based on the energy function as presented in Weitang Liu et al: "Energy-based Out-of-Distribution Detection", Advances in Neural Information Processing Systems 33 (NeurIPS 2020).

In some embodiments, $U(x)$ may be based on intermediate results of the computation of $f_\theta(x)$. For example, with an object detection network $f_\theta$, the function $U$ can be $U(x) = 1 - \max_i c_i$.

For example, the function $U$ may be based on any uncertainty quantification technique that measures or indicates an uncertainty of $f_\theta(x)$ - intuitively, the more uncertain the network $f_\theta$ is about its output, the more likely it is that the corresponding input sample x is an NPD sample, and this can be leveraged for the function $U$. For example, the function U may be based on the well-known entropy function. In this case, with a classifier network $f_\theta$, $U(x) = -\sum_{i=1}^{k} f_\theta(x)_i \, log_2 \, f_\theta(x)_i$. Whilst this equation uses $log_2$, it will be appreciated that other logarithms could be used instead - for example, one could scale $U(x)$ by a factor $1 / log_2 k$ so that the range of $U$ equals $[0,1]$, and this is equivalent to using $log_k$ in the equation above. Many other uncertainty quantification techniques are known, as set out in Moloud Abdar et al: "A Review of Uncertainty Quantification in Deep Learning: Techniques, Applications and Challenges", Information Fusion, Volume 76, December 2021, pp. 243 - 297, and such techniques could be used for the function U. As mentioned, sometimes one of the classes, say class j, represents NPD samples - in this case, one may set $U(x) = f_\theta(x)_j$.

In the above examples, a low value for $U(x)$ suggests that the input sample x is a PD sample, whereas a high value for $U(x)$ suggests that the input sample x is an NPD sample - however, this is not required and other arrangements for the function U could be used instead. For example, the function $U$ can be equal to the maximum softmax probability function mentioned above. In this example, a high value for $U(x)$ suggests that the input sample $x$ is a PD sample, whereas a low value for $U(x)$ suggests that the input sample $x$ is an NPD sample.

The task of determining whether a sample $x \in X$ is in $X_0$ or in $X_1$ can be formulated as a binary hypothesis test in which the null hypothesis $H_0$ is that $x \in X_0$ (i.e. $x$ is a PD sample), and in which the alternative hypothesis $H_1$ is that $x \in X_1$ (i.e. $x$ is an NPD sample). One possible hypothesis test is to compare the likelihoods $p(x|H_0)$ and $p(x|H_1)$ where $p(x|H_i)$ for $i$ = 0,1 is the probability density function for the hypothesis $H_i$ evaluated for the input x, for example by calculating the likelihood ratio

$$r(x) = \frac{p(x \mid H_0)}{p(x \mid H_1)}$$

The value of $r(x)$ may be compared with a threshold $T$, and $H_0$ is accepted (i.e. it is concluded that $x \in X_0$) if $r(x) > T$, whereas $H_1$ is accepted and $H_0$ is rejected (i.e. it is concluded that $x \in X_1$) if $r(x) < T$. It will be appreciated that the decision on whether to accept or reject $H_0$ if $r(x) = T$ is a design choice.

Determination of the likelihoods $p(x \mid H_0)$ and $p(x \mid H_1)$ may be based on the function $U(x)$ above. Let the random variables $X_0$ and $X_1$ represent samples in $X_0$ and $X_1$, respectively. Further, let the probability density function of $U(X_i)$ for $i = 0,1$ be denoted by $p_i(z)$. The likelihoods $p(x \mid H_0)$ and $p(x \mid H_1)$ may be computed as $p(x \mid H_0) = p_0(U(x))$ and $p(x \mid H_1) = p_1(U(x))$.

Let $q_0$ and $q_1$ denote the probability density functions of the random variables $r(X_0)$ and $r(X_1)$ respectively. Further, let $Q_0$ and $Q_1$ denote the corresponding cumulative distribution functions of $q_0$ and $q_1$ i.e. $Q_0(z) = Pr(r(X_0) \leq z)$ and $Q_1(z) = Pr(r(X_1) \leq z)$.

A Type I error (or a false rejection or false positive) happens when $H_0$ is true but is rejected, i.e. $x$ is a PD sample ($x \in X_0$), but the hypothesis test incorrectly concludes that $x$ is an NPD sample ($x \in X_0$). The probability, $p_{FP}$, of a Type I error may therefore be expressed as $p_{FP}(t) = Pr(r(X_0) \leq t) = Q_0(t)$ (where $t$ parameterizes this expression for $p_{FP}$ and represents the parameterized threshold $T$).

A Type II error (or a false acceptance or false negative) happens when $H_0$ is false but is accepted, i.e. $x$ is an NPD sample ($x \in X_1$), but the hypothesis test incorrectly concludes that $x$ is a PD sample ($x \in X_0$). The probability, $p_{FN}$, of a Type II error may therefore be expressed as $p_{FN}(t) = Pr(r(X_1) > t) = 1 - Q_1(t)$ (where $t$ parameterizes this expression for $p_{FN}$ and represents the parameterized threshold $T$).

$p_{FP}(t)$ and/or $p_{FN}(t)$ may be used (e.g. by the service provider) to define the value of $T$. For example, one may select $T$ to be the value of $t$ for which $p_{FP}(t) = p_{FN}(t)$. This probability is referred to as the Equal Error Rate (EER). Alternatively, there may be a target false positive probability, in which case one may select $T$ to be a value of $t$ for which $p_{FP}(t)$ is at most that target false positive probability. For example, one may select $T$ to be the value of $t$ for which $p_{FP}(t)$ is at most the target false positive probability and the value of $p_{FN}(t)$ is as small as possible. Likewise, there may be a target false negative probability, in which case one may select $T$ to be a value of $t$ for which $p_{FN}(t)$ is at most that target false negative probability. For example, one may select $T$ to be the value of $t$ for which $p_{FN}(t)$ is at most the target false negative probability and the value of $p_{FP}(t)$ is as small as possible.

In practice, $p_0$ and $p_1$ can be determined or approximated using a set of PD samples and a set of NPD samples - this could be, done, for example, by the service provider, who has access to both PD samples, NPD samples and the network $f_\theta$. An independent set of PD samples and an independent set of NPD samples can then be used together with the hypothesis test and the approximations of $p_0$ and $p_1$ to select a suitable value of $T$ as discussed above, e.g. based on the EER. This may be performed (e.g. by the service provider) as part of a one-time setup of embodiments of the invention.

Note that PD samples are already available to the service provider (for example, each $x_i$ of each $(x_i, \phi(x_i)) \in \mathcal{D}_{test}$ is such a sample), and that the true labels $\phi(x_i)$ are not needed in these computations. As indicated above, NPD samples are typically easy to obtain.

<u>**Example 2:**</u> This example uses the binary hypothesis test described above with

$$U(x) = 1 - \max_i f_\theta(x)_i$$

(i.e. with the function $U$ based on the maximum softmax probability). The network $f_\theta$ used to compute $U(x)$ is the same network as in Example 1 above (i.e. the network $f_\theta$ as used for generating the numbers in Table 1). Since the clone network $g_\phi$ that was trained using PD samples in Example 1 is not used in this example, its 25,000 PD train samples are now used to set up the PD/NPD distinguisher. In addition, the 50,000 images of the ImageNet validation set are also used for this purpose. ImageNet classes that are similar to CIFAR-10 classes are filtered out before the distinguisher is set up (discarding 12,200 of the 50,000 images). This results in a PD/NPD distinguisher achieving an EER $\approx 0.30$.

Table 2

| | $f'$ | ImageNet data | | | |
|---|---|---|---|---|---|
| Size of train set | 27,000 | 25,000 | 50,000 | 100,000 | 200,000 |
| Accuracy on $\mathcal{D}_{test}$ | 0.827 | 0.754 | 0.777 | 0.794 | 0.808 |
| Accuracy on $\mathcal{D}_{test}^*$ | 0.410 | 0.858 | 0.895 | 0.940 | 0.944 |

Table 2 lists the accuracies on the test sets $\mathcal{D}_{test}$ and $\mathcal{D}_{test}^*$ of the network $f'$ defined as

$$f'(x) := \begin{cases} f_\theta(x) & \text{if the test determines that } x \in \mathcal{X}_0 \\ f_{\theta^*}(x) & \text{if the test determines that } x \in \mathcal{X}_1 \end{cases}$$

where the test is the binary hypothesis test described above and where the networks $f_\theta$ and $f_{\theta^*}$ are the same as in Example 1 (i.e. the networks $f_\theta$ and $f_{\theta^*}$ as used for generating the numbers in Table 1). Table 2 also lists the accuracies on the test sets $D_{test}$ and $\mathcal{D}_{test}^*$ of four clone networks $g_\phi$ of the network $f'$. This means that the network $f'$ was used to label the images $y_i \in X$ for $1 \le i \le m$ in the train set $\mathcal{D} := \{(y_i, f'(y_i)) \mid 1 \le i \le m\}$ of each clone network $g_\phi$. As shown in Table 2, the four clone networks were trained using ImageNet data; more precisely, each image $y_i$ in the train set $\mathcal{D}$ is an image of the ImageNet train set. As indicated above, ImageNet consists mainly of NPD data. The four sizes of the train sets $\mathcal{D}$ are the same as in Example 1. As before, for each of the networks in the table, training was performed five times and the results of the network with the highest accuracy on $D_{test}$ after the final epoch are listed in Table 2. This means that one can compare the accuracies on the test sets $D_{test}$ and $\mathcal{D}_{test}^*$ for the clone networks $g_\phi$ obtained using ImageNet data in Tables 1 and 2.

Note that honest users are expected to receive responses $f_\theta(x)$ for around 70% of their submitted queries (each query having a PD query sample). Observe also that the accuracy of the network $f'$ on the test set $D_{test}$ is higher than the corresponding accuracy of the watermarked network $f_{\theta^*}$ as listed in Table 1. At the same time, the clone networks $g_\phi$ obtained by using Image Net data still achieve a high accuracy on $\mathcal{D}_{test}^*$, especially if the adversary wants to achieve an accuracy on $D_{test}$ that is comparable to the accuracy of the network $f'$ on $D_{test}$.

### End of Example 2

**Example 3:** As indicated before, embodiments of the invention may be compared to a method using a random selection between the outputs $f_\theta(x)$ and $f_{\theta^*}(x)$ for every input x, with this selection being performed independently and with the same probability for every input $x$. As before, let $p$ denote the probability that the output $f_\theta(x)$ is selected for the input $x$, i.e. if this network is denoted by $f''$, then

$$f''(x) = \begin{cases} f_\theta(x) & \text{with probability } p \\ f_{\theta^*}(x) & \text{with probability } 1 - p \end{cases}$$

To cause a comparable level of inconvenience to honest users as in Example 2, one can select $p = 0.70$ (so that each received PD sample is classified as a PD sample with probability $p = 0.70$ and classified as an NPD sample with probability $1 - p = 0.30$).

Table 3

| | *f"* | ImageNet data | | | |
|---|---|---|---|---|---|
| Size of train set | 27,000 | 25,000 | 50,000 | 100,000 | 200,000 |
| Accuracy on $\mathcal{D}_{test}$ | 0.818 | 0.757 | 0.786 | 0.796 | 0.811 |
| Accuracy on $\mathcal{D}_{test}^*$ | 0.300 | 0.339 | 0.234 | 0.558 | 0.630 |

The same experiments as in Example 2 were performed, using the network $f''$ instead of the network $f'$. The results are summarized in Table 3. The results show that the watermark transfers much better if the PD/NPD distinguisher from Example 2 is used instead of a random selection (in that a higher accuracy on $\mathcal{D}_{test}^*$ is obtained when the PD/NPD distinguisher is used). In other words, embodiments of the invention based on a PD/NPD distinguisher outperform the method based on random selection, even if the quality of the PD/NPD distinguisher is relatively low.

Moreover, this difference in performance is expected to increase if a better quality PD/NPD distinguisher is used (for instance, a PD/NPD distinguisher achieving a lower EER). For example, the quality of the PD/NPD distinguisher used in Example 2 may be improved by using a network $f_\theta$ that achieves a higher accuracy on the test set $D_{test}$ (e.g. by using a larger or better quality train set, and/or by using data augmentation techniques). Additionally, or alternatively, the quality of the PD/NPD distinguisher may also be improved by using a different function U.

If a PD/NPD distinguisher with a lower EER is used, then the value of $p$ should be set accordingly (i.e. if the corresponding threshold $T$ is denoted by $T_{EER}$, then $p = 1 - p_{FP}(T_{EER})$ so that the inconvenience as experienced by honest users is similar for the networks $f'$ and $f''$) to compare the accuracies on $\mathcal{D}^*_{test}$ of the networks $f'$ and $f''$.

Table 4

| $p$ | 0.75 | 0.80 | 0.85 | 0.90 |
|---|---|---|---|---|
| Accuracy on $\mathcal{D}^*_{test}$ | 0.496 | 0.287 | 0.091 | 0.029 |

The same experiments as above were performed to determine the accuracies of clone networks $g_\phi$ of the network $f''$ on the test set $\mathcal{D}^*_{test}$ for four different values of $p$. The size of the train set is always 200,000 in these experiments (i.e. as in the last column of Table 3). For each of the values of $p$, training was performed five times and the average accuracy of the corresponding clone networks $g_\phi$ on $\mathcal{D}^*_{test}$ after the final epoch are listed in Table 4 (together with the corresponding value of $p$). A reason for listing the average accuracies instead of the highest accuracies is that there is a relatively large variation in the accuracies associated with different trainings in these experiments. The results show that the average accuracy of the clone networks $g_\phi$ of the network $f''$ on the test set $\mathcal{D}^*_{test}$ decreases quickly if the value of $p$ increases.

As a concrete example, if a higher-quality PD/NPD distinguisher with an EER of 0.15 would be used, then the inconvenience for honest users would be lowered (since honest users are now expected to receive responses $f_\theta(x)$ for 85% of their submitted queries instead of the 70% above), while the accuracy of a clone network $g_\phi$ on $\mathcal{D}^*_{test}$ is expected to increase compared to the numbers listed in Table 2 (or at least remain very high). At the same time, as shown in Table 4, the watermark would not transfer if the method based on random selection would be used with $p = 1 - 0.15 = 0.85$ (i.e. the value of $p$ that causes a similar level of inconvenience to honest users).

**End of Example 3**

Note that different hypothesis tests from that mentioned above could be used to distinguish PD samples from NPD samples. However, a well-known lemma of Neyman and Pearson shows that the likelihood ratio test is optimal if the likelihood functions are known. Although in practice typically only approximations of these functions will be available, this lemma does indicate that the likelihood ratio test will generally be a good choice.

The logarithm of the likelihood ratio, also referred to as the log-likelihood ratio, could be used instead of the ratio itself. This may be useful, for example, if the log-likelihood ratios of $X_0$ and $X_1$ can be assumed to follow normal distributions.

In some embodiments, an alternative example hypothesis test is used in which the value of $U(x)$ is compared with a threshold $T'$, and $H_0$ is accepted (i.e. it is concluded that $x \in X_0$) if $U(x) < T'$, whereas $H_1$ is accepted and $H_0$ is rejected (i.e. it is concluded that $x \in X_1$) if $U(x) > T'$. Again, it will be appreciated that the decision on whether to accept or reject $H_0$ if $U(x) = T'$ is a design choice. In addition, this alternative example hypothesis test assumes that a low value for $U(x)$ suggests that the input sample $x$ is a PD sample, whereas a high value for $U(x)$ suggests that the input sample $x$ is an NPD sample. The alternative example hypothesis test and the analysis below can be easily adapted for cases in which a high value for $U(x)$ suggests that the input sample $x$ is a PD sample and a low value for $U(x)$ suggests that the input sample $x$ is an NPD sample.

As above, let the random variables $X_0$ and $X_1$ represent samples in $X_0$ and $X_1$, and let the probability density function of $U(X_i)$ for $i = 0,1$ be denoted by $p_i(z)$. Further, let the corresponding cumulative distribution functions be denoted by $P_0$ and $P_1$, i.e. $P_0(z) = Pr(U(X_0) \leq z)$ and $P_1(z) = Pr(U(X_1) \leq z)$.

The probability $p'_{FP}$ of a Type I error is $p'_{FP}(t) = Pr(U(X_0) > t) = 1 - P_0(t)$, (where $t$ parameterizes this expression for $p'_{FP}$ and represents the parameterized threshold $T'$).

The probability $p'_{FN}$ of a Type II error equals is $p'_{FN}(t) = Pr(U(X_1) \leq t) = P_1(t)$, (where $t$ parameterizes this expression for $p'_{FN}$ and represents the parameterized threshold T').

As before, $p'_{FP}(t)$ and/or $p'_{FN}(t)$ may be used (e.g. by the service provider) to define the value of $T'$. For example, one may select $T'$ to be the value of $t$ for which $p'_{FP}(t) = p'_{FN}(t)$ (i.e. based on the EER). Alternatively, there may be a target false positive probability, in which case one may select $T'$ to be a value of $t$ for which $p'_{FP}(t)$ is at most that target false positive probability. For example, one may select $T'$ to be the value of $t$ for which $p'_{FP}(t)$ is at most the target false positive probability and $p'_{FN}(t)$ is as small as possible. If the selection of $T'$ is only based on $p'_{FP}$, then the functions $p_1$ and $P_1$ do not

necessarily need to be known/estimated. Likewise, there may be a target false negative probability, in which case one may select $T'$ to be a value of $t$ for which $p'_{FN}(t)$ is at most that target false negative probability. For example, one may select $T'$ to be the value of $t$ for which $p'_{FN}(t)$ is at most the target false negative probability and $p'_{FP}(t)$ is as small as possible. If the selection of $T'$ is only based on $p'_{FN}$, then the functions $p_0$ and $P_0$ do not necessarily need to be known/estimated.

In practice, $p'_{FP}$ and $p'_{FN}$ can be determined or approximated using a set of PD samples and a set of NPD samples - this could be, done, for example, by the service provider, who has access to both PD samples, NPD samples and the network $f_\theta$. An independent set of PD samples and an independent set of NPD samples can then be used together with the hypothesis test and the approximations of $p'_{FP}$ and $p'_{FN}$ to select a suitable value of $T$ as discussed above, e.g. based on the EER. This may be performed (e.g. by the service provider) as part of a one-time setup of embodiments of the invention. Note that PD samples are already available to the service provider (for example, each $x_i$ of each

$$\left(x_i, \phi(x_i)\right) \in \mathcal{D}_{test}$$ is such a sample), and that the true labels $\phi(x_i)$ are not needed in these computations. As indicated above, NPD samples are typically easy to obtain.

As an alternative example, in case of an object detector, the function $$U(x) = 1 - \max_i c_i$$ and one of the hypothesis tests described above can be used to distinguish PD samples from NPD samples. For example, if $U(x) > T''$ for a threshold $T''$, then the PD/NPD distinguisher may determine that the query sample $x$ is an NPD sample; otherwise, the PD/NPD distinguisher may determine that the query sample $x$ is a PD sample.

As yet another alternative example, a separate classification network $h$ may be trained to classify samples $x \in X$ as being either a PD sample or an NPD sample. This network may be trained using a set of PD samples (labelled as PD samples) and/or a set of NPD samples (labelled as NPD samples). To approximate the value of the probability of a Type I error, the PD samples $x$ of the test set $D_{test}$ (or some other set of PD samples) could be input to this network $h$, with the probability of a Type I error being the proportion that are labelled by the network $h$ as NPD samples. To approximate the value of the probability of a Type II error, a number of NPD samples may be input to this network $h$, with the probability of a Type II error being the proportion that are labelled by the network $h$ as PD samples.

More examples of PD/NPD distinguishers can be found in Jingkang Yang et al: "Generalized Out-of-Distribution Detection: A Survey", 2022, at https://arxiv.org/abs/2009.12153v2 and Jingkang Yang et al.: "OpenOOD: Benchmarking Generalized Out-of-Distribution Detection", 36th Conference on Neural Information Processing Systems (NEURIPS 2022).

### *Probability mass functions and expected number of watermarked and non-watermarked outputs*

In the analysis below, PD query samples are modelled as being independent and identically distributed, and these samples are assumed to be drawn from the same distribution as the PD samples that were used to set up the PD/NPD distinguisher. NPD query samples are also modelled as being independent and identically distributed, and these samples are assumed to be drawn from the same distribution as the NPD samples that were used to set up the PD/NPD distinguisher.

Let $\alpha$ be the false positive probability of the PD/NPD distinguisher and let $\beta$ be its false negative probability. Further, let $N$ denote the total number of query samples tested with the PD/NPD distinguisher and let $P$ denote the number of PD query samples tested with the PD/NPD distinguisher (i.e. the number of NPD query samples tested with the PD/NPD distinguisher equals $N - P$).

If the random variable $Y$ represents the number of queries that are classified as having a PD sample, then it follows that the probability mass function of $Y$ is given by:

$$Pr(Y = k \mid N, \alpha, \beta, P) = \sum_{i=0}^{k} \binom{P}{i} \alpha^{P-i} (1 - \alpha)^i \binom{N-P}{k-i} \beta^{k-i} (1 - \beta)^{N-P-k+i}$$

for $0 \le k \le N$. The $i$-th term in this sum is the probability that exactly $i$ PD query samples are classified as PD samples and that exactly $k - i$ NPD query samples are classified as PD samples. The expected number of non-watermarked outputs is given by:

$$E[Y \mid N, \alpha, \beta, P] = (1 - \alpha)P + \beta(N - P) = \beta N + (1 - \alpha - \beta)P$$

since the expected number of non-watermarked outputs associated with the PD query samples and the NPD query samples equals $(1 - \alpha)P$ and $\beta(N - P)$, respectively.

If the random variable $Y'$ represents the number of queries that are classified as having an NPD sample, then it follows that the probability mass function of $Y'$ is given by:

$$Pr(Y' = k \mid N, \alpha, \beta, P) = \sum_{i=0}^{k} \binom{P}{i} \alpha^i (1 - \alpha)^{P-i} \binom{N-P}{k-i} \beta^{N-P-k+i} (1 - \beta)^{k-i}$$

for $0 \le k \le N$. The $i$-th term in this sum is the probability that exactly $i$ PD query samples are classified as NPD samples and that exactly $k - i$ NPD query samples are classified as NPD samples. The expected number of watermarked outputs is given by:

$$E[Y' \mid N, \alpha, \beta, P] = \alpha P + (1 - \beta)(N - P) = (1 - \beta)N + (\alpha + \beta - 1)P$$

since the expected number of watermarked outputs associated with the PD query samples and the NPD query samples equals $\alpha P$ and $(1 - \beta)(N - P)$, respectively.

Clearly, $Pr(Y' = k \mid N, \alpha, \beta, P) = Pr(Y = N - k \mid N, \alpha, \beta, P)$ for $0 \le k \le N$ and $E[Y' \mid N, \alpha, \beta, P] = N - E[Y \mid N, \alpha, \beta, P]$.

A special case of the equations above is an adversary submitting $N$ queries having NPD query samples only (i.e. $P = 0$). In this case $Y$ and $Y'$ both follow a binomial distribution: $Y \sim B(N, \beta)$ and $Y' = B(N, 1 - \beta)$. That is,

$$Pr(Y = k \mid N, \alpha, \beta, 0) = \binom{N}{k} \beta^k (1 - \beta)^{N-k}$$

and

$$Pr(Y' = k \mid N, \alpha, \beta, 0) = \binom{N}{k} \beta^{N-k} (1 - \beta)^k$$

Moreover, the expected number of non-watermarked outputs $E[Y \mid N, \alpha, \beta, 0]$ equals $\beta N$ and the expected number of watermarked outputs $E[Y' \mid N, \alpha, \beta, 0]$ equals $(1 - \beta)N$.

Another special case is an honest user submitting $N$ queries having PD query samples only (i.e. $P = N$). In this case $Y$ and $Y'$ both follow a binomial distribution: $Y \sim B(N, 1 - \alpha)$ and $Y' = B(N, \alpha)$. That is,

$$Pr(Y = k \mid N, \alpha, \beta, N) = \binom{N}{k} \alpha^{N-k} (1 - \alpha)^k$$

and

$$Pr(Y' = k \mid N, \alpha, \beta, N) = \binom{N}{k} \alpha^k (1 - \alpha)^{N-k}$$

Moreover, the expected number of non-watermarked outputs $E[Y \mid N, \alpha, \beta, N]$ equals $(1 - \alpha)N$ and the expected number of watermarked outputs $E[Y' \mid N, \alpha, \beta, N]$ equals $\alpha N$.

In practice, a relatively large value of $\alpha$ can be tolerated. For example, if $\alpha = 0.5$, then it is expected that the output will be generated by the network $f_\theta$ (i.e. with the non-watermarked model $\theta$) for 50% of the user's queries, which is already a significant improvement compared to 0% of the user's queries in case embodiments of the invention are not used (i.e. if the watermarked network $f_{\theta*}$ with the watermarked model $\theta*$ were used all the time). The value of $\beta$ is preferably not too large, so that for sufficiently many queries having NPD query samples, the output will be generated by the watermarked network $f_{\theta*}$ with the watermarked model $\theta*$ to ensure that the watermark is transferred to the clone network $g_\phi$ in case of an attack that uses a number of NPD samples (however, recall that a relatively large value of $\beta$, e.g. $\beta = 0.30$, still gave good results in Example 2).

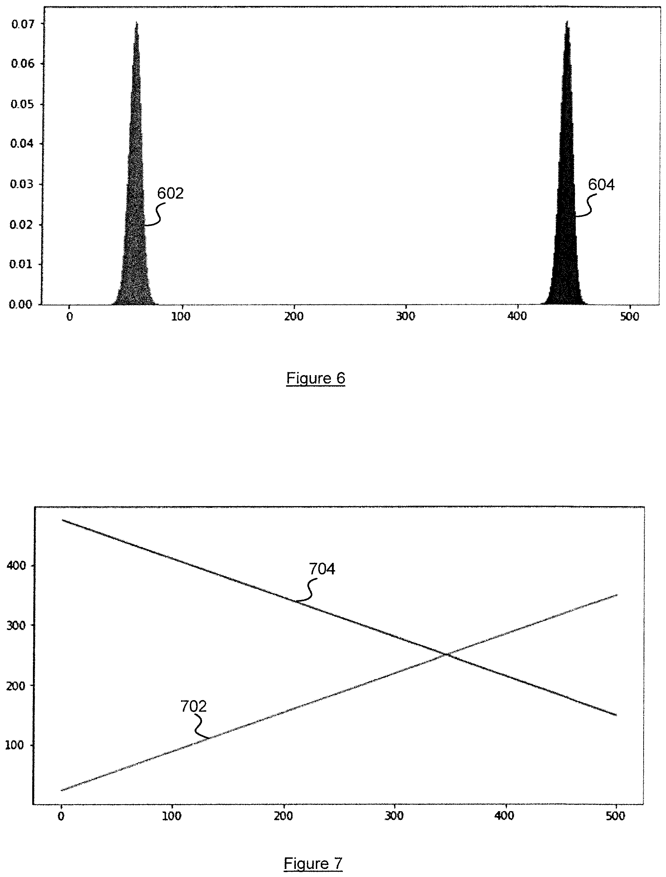

**Example 4:** Let $N = 500$, $\alpha = 0.30$, $\beta = 0.05$, and $P = 50$. The bars 602 in Figure 6 depict the probability mass function of $Y$ (i.e. associated with outputs generated by the network $f_\theta$ with the non-watermarked model $\theta$), and the bars 604 in Figure 6 depict the probability mass function of $Y'$ (i.e. associated with outputs generated by the watermarked network $f_{\theta*}$

with the watermarked model $\theta^*$). As indicated above, the two probability mass functions are related by $Pr(Y' = k \mid 500, 0.30, 0.05, 50) = Pr(Y = 500 - k \mid 500, 0.30, 0.05, 50)$ for $0 \leq k \leq 500$.

**End of Example 4**

<u>Example 5:</u> Let $N = 500$, $\alpha = 0.30$, and $\beta = 0.05$. The line 702 in Figure 7 depicts the expected number of non-watermarked outputs (i.e. number of outputs generated by the network $f_\theta$ with the non-watermarked model $\theta$) as a function of $P$ (i.e. the number of queries having PD query samples), and the line 704 in Figure 7 depicts the expected number of watermarked outputs (i.e. the number of outputs generated by the watermarked network $f_{\theta*}$ with the watermarked model $\theta^*$) as a function of $P$. As indicated above, the two expected numbers are related by $E[Y' \mid 500, 0.30, 0.05, P] = 500 - E[Y \mid 500, 0.30, 0.05, P]$.

**End of Example 5**

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

All reference documents cited herein are incorporated in their entirety.

**Claims**

1. A method of operating a first neural network, the first neural network configured to generate a result based on an input sample from a predetermined domain of possible samples, the first neural network trained to provide functionality corresponding to a subset of the domain, wherein the method comprises:

   receiving, from a user, a query having a query sample from the domain; and
   generating a response to the query;
   wherein generating the response to the query comprises:

   performing a test to determine whether or not the query sample is a member of the subset;
   in response to one or more first conditions being met, using the first neural network to generate a first result based on the query sample, and generating the response to the query based on the first result, wherein at least one first condition is that the test determines that the query sample is a member of the subset; and in response to one or more second conditions being met, using a watermarked version of the first neural network to generate a second result based on the query sample, and generating the response to the query based on the second result, wherein at least one second condition is that the test determines that the query sample is not a member of the subset.

2. The method of claim 1, wherein the watermarked version of the first neural network provides substantially the same functionality as the first neural network together with functionality for identifying the watermarked version of the first neural network.

3. The method of claim 2, wherein the functionality for identifying the watermarked version of the first neural network comprises provision of an erroneous or inaccurate or unexpected result if the input sample has a predetermined characteristic.

4. The method of any one of the preceding claims, wherein:

   (a) the one or more first conditions is a single condition that the query sample is a member of the subset; and/or
   (b) the one or more second conditions is a single condition that the query sample is not a member of the subset.

5. The method of any one of the preceding claims, wherein performing the test to determine whether or not the query sample is a member of the subset comprises performing a comparison of a first likelihood and a second likelihood, the first likelihood based on the query sample and a null hypothesis that the query sample is a member of the subset, the second likelihood based on the query sample and an alternative hypothesis that the query sample is not a member of the subset.

6. The method of claim 5, wherein performing the test to determine whether or not the query sample is a member of the subset comprises computing the first likelihood based on $p_0(U(x))$ and computing the second likelihood based on $p_1(U(x))$, wherein $x$ is the corresponding query sample, $U$ is a function for distinguishing between samples of the domain that are members of the subset and samples of the domain that are not members of the subset, $p_0$ is a probability density function for $U(X_0)$ where $X_0$ is a random variable representing samples of the domain that are members of the subset, and $p_1$ is a probability density function for $U(X_1)$ where $X_1$ is a random variable representing samples of the domain that are not members of the subset.

7. The method of claim 5 or 6, wherein performing the comparison of the first likelihood and the second likelihood comprises comparing a ratio of the first likelihood and the second likelihood to a threshold value.

8. The method of claim 7, wherein:

   (a) the threshold value is set so that a false positive probability of the test equals a false negative probability of the test; or
   (b) the threshold value is set so that a false positive probability of the test is at most a target false positive probability; or
   (c) the threshold value is set so that a false negative probability of the test is at most a target false negative probability.

9. The method of any one of the preceding claims, wherein the method is performed by a system or device that (a) provides the implementation of the first neural network and the watermarked version of the first neural network or (b) provides access to the implementation of the neural network and the watermarked version of the first neural network.

10. The method of any one of the preceding claims, wherein the user is: (a) one or more human users; or (b) one or more computing devices; or (c) one or more software applications.

11. The method of any one of the preceding claims, wherein the functionality is classification of samples of the predetermined domain according to one or more classes.

12. The method of claim 11, wherein at least one of the classes corresponds to samples that are not in the subset.

13. The method of any one of claims 1 to 10, wherein the functionality is object detection, said object detection to detect one or more objects of one or more types within samples of the predetermined domain.

14. A system arranged to carry out a method according to any one of claims 1 to 13.

15. A computer program which, when executed by one or more processors, causes the one or more processors to carry out a method according to any one of claims 1 to 13.

16. A computer-readable medium storing a computer program according to claim 15.

100

102

104

106

108

110

112

116

114

121

120

124

126

118

122

<u>FIGURE 1</u>

Label = Airplane

Label = Automobile

<u>FIGURE 5</u>

FIGURE 2a

FIGURE 2b

$220^{(a)}$

$220^{(b)}$

$f_\theta(x^{(a)})$ or $f_{\theta^*}(x^{(a)})$

$x^{(a)}$

$x^{(b)}$

$f_\theta(x^{(b)})$ or $f_{\theta^*}(x^{(b)})$

$220^{(c)}$

$g_\phi$

230

$x^{(c)}$

210

200

202

201 $f_\theta$

$f_\theta(x^{(c)})$ or $f_{\theta^*}(x^{(c)})$

300

301 $f_{\theta^*}$

FIGURE 3a

$220^{(c)}$

$g_\phi$

230

$f_\theta(x^{(c)})$ or $f_{\theta^*}(x^{(c)})$

$x^{(c)}$

240

201 $f_\theta$

202

301 $f_{\theta^*}$

300

FIGURE 3b

400

402

Receive next query

404

Perform test:
d=TRUE if query sample is in PD;
d=FALSE if query sample is not in PD

406

d=TRUE?

Yes ——————— No

408

Use $f_\theta$ to generate result based on sample

412

Use $f_{\theta^*}$ to generate result based on sample

410

Generate response based on result from $f_\theta$

414

Generate response based on result from $f_{\theta^*}$

<u>FIGURE 4a</u>

450

402
Receive next query

404
Perform test:
d=TRUE if query sample is in PD;
d=FALSE if query sample is not in PD

406a
1st condition(s) met, including d=TRUE?

406b
2nd condition(s) met, including d=FALSE?

406c
Other conditions met?

Yes

Yes

Yes

408
Use $f_\theta$ to generate result based on sample

412
Use $f_{\theta^*}$ to generate result based on sample

416
Other actions

410
Generate response based on result from $f_\theta$

414
Generate response based on result from $f_{\theta^*}$

FIGURE 4b

FIGURE 4c

Figure 6

Figure 7

Europäisches
Patentamt

European
Patent Office

Office européen
des brevets

# EUROPEAN SEARCH REPORT

**Application Number**

EP 23 18 3261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/326748 A1 (VAN VREDENDAAL CHRISTINE [NL] ET AL) 21 October 2021 (2021-10-21) * paragraph [0015] – paragraph [0020] * ----- | 1-16 | INV. G06N3/045 G06F21/16 G06N3/084 G06N3/094 G06F21/12 |
| Y | Szyller Sebastian ET AL: "DAWN: Dynamic Adversarial Watermarking of Neural Networks", , 16 July 2021 (2021-07-16), XP093109166, Retrieved from the Internet: URL:https://arxiv.org/pdf/1906.00830.pdf [retrieved on 2023-12-05] * Section 4.1 and 10 * ----- | 1-16 | |
| A | US 2020/327443 A1 (VAN VREDENDAAL CHRISTINE [NL] ET AL) 15 October 2020 (2020-10-15) * paragraph [0009] – paragraph [0025] * ----- | 1,4-16 | |
| A | WO 2023/085984 A1 (ERICSSON TELEFON AB L M [SE]) 19 May 2023 (2023-05-19) * claims 1-11 * ----- | 1,4-16 | **TECHNICAL FIELDS SEARCHED (IPC)** G06N G06F |
| A | US 2020/134391 A1 (ASSADERAGHI FARIBORZ [US] ET AL) 30 April 2020 (2020-04-30) * paragraph [0018] – paragraph [0027] * ----- | 1,4-16 | |
| A | WO 2020/259946 A1 (BOSCH GMBH ROBERT [DE] ET AL.) 30 December 2020 (2020-12-30) * paragraph [0006] – paragraph [0013] * * paragraph [0020] – paragraph [0044] * ----- -/-- | 1,4-16 | |

The present search report has been drawn up for all claims

| Place of search | Date of completion of the search | Examiner |
|---|---|---|
| The Hague | 5 December 2023 | Targon, Valerio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

**EP 23 18 3261**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AARTS ARNE ET AL: "Cloning Object Detectors", 2022 IEEE 12TH INTERNATIONAL CONFERENCE ON CONSUMER ELECTRONICS (ICCE-BERLIN), IEEE, 2 September 2022 (2022-09-02), pages 1-6, XP034224557, DOI: 10.1109/ICCE-BERLIN56473.2022.9937123 [retrieved on 2022-11-11] * Section IV and VI * ----- | 1,4-16 | |
| A | Yao Hongwei ET AL: "FDINET: Protecting against DNN Model Extraction using Feature Distortion Index", , 22 June 2023 (2023-06-22), XP093109157, Retrieved from the Internet: URL:https://arxiv.org/pdf/2306.11338.pdf [retrieved on 2023-12-05] * Sections 3 and 4 * ----- | 1-16 | |

**TECHNICAL FIELDS SEARCHED (IPC)**

The present search report has been drawn up for all claims

| Place of search | Date of completion of the search | Examiner |
|---|---|---|
| The Hague | 5 December 2023 | Targon, Valerio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 2 of 2**

**EP 4 488 878 A1**

## ANNEX TO THE EUROPEAN SEARCH REPORT
## ON EUROPEAN PATENT APPLICATION NO.

EP 23 18 3261

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2023

| Patent document cited in search report | | Publication date | Patent family member(s) | | Publication date |
|---|---|---|---|---|---|
| US 2021326748 | A1 | 21-10-2021 | NONE | | |
| US 2020327443 | A1 | 15-10-2020 | EP<br>US | 3723008 A1<br>2020327443 A1 | 14-10-2020<br>15-10-2020 |
| WO 2023085984 | A1 | 19-05-2023 | NONE | | |
| US 2020134391 | A1 | 30-04-2020 | NONE | | |
| WO 2020259946 | A1 | 30-12-2020 | EP<br>WO | 4007979 A1<br>2020259946 A1 | 08-06-2022<br>30-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FLORIAN TRAMÈR et al.** Stealing Machine Learning Models via Prediction APIs. *Proceedings of the 25th USENIX Security Symposium*, August 2016, 601-618
- **TRIBHUVANESH OREKONDY et al.** Knockoff Nets: Stealing Functionality of Black-Box Models. *Proceedings of the IEEE/CVF Conference on Computer Vision and Pattern Recognition (CVPR), Long Beach, CA, USA*, 2019, 4949-4958
- **JACSON RODRIGUES CORREIA-SILVA et al.** Copycat CNN: Stealing Knowledge by Persuading Confession with Random Non-Labeled Data. *International Joint Conference on Neural Networks (IJCNN)*, July 2018, 1-8
- **ARNE AARTS et al.** Leveraging Partial Model Extractions using Uncertainty Quantification. *IEEE 10th International Conference on Cloud Networking (CloudNet), Virtual Conference*, November 2021, 19-25
- **TAESUNG LEE et al.** Defending against NN Model Stealing Attacks using Deceptive Perturbations. *2nd Deep Learning and Security Workshop (DLS 2019)*, May 2019
- **TRIBHUVANESH OREKONDY et al.** Prediction Poisoning: Towards Defenses Against DNN Model Stealing Attacks. *Eighth International Conference on Learning Representations (ICLR), Virtual Conference*, 2020

- **MANISH KESARWANI et al.** Model Extraction Warning in MLaaS Paradigm. *ACSAC '18: Proceedings of the 34th Annual Computer Security Applications Conference*, December 2018, 371-380
- **MIKA JUUTI et al.** PRADA: Protecting Against DNN Model Stealing Attacks. *IEEE European Symposium on Security and Privacy (EuroS&P), Stockholm, Sweden*, 2019, 512-527
- **FRANZISKA BOENISCH**. A Systematic Review on Model Watermarking for Neural Networks. *Sec. Cybersecurity and Privacy*, 29 November 2021, vol. 4
- **JOST TOBIAS SPRINGENBERG et al.** Striving for Simplicity: The All Convolutional Net. *3rd International Conference on Learning Representations, ICLR*, 07 May 2015
- Energy-based Out-of-Distribution Detection. **WEI-TANG LIU et al.** Advances in Neural Information Processing Systems. NeurIPS, 2020, vol. 33
- **MOLOUD ABDAR et al.** A Review of Uncertainty Quantification in Deep Learning: Techniques, Applications and Challenges. *Information Fusion*, vol. 76, 243-297
- **JINGKANG YANG et al.** *Generalized Out-of-Distribution Detection: A Survey*, 2022, https://arxiv.org/abs/2009.12153v2
- OpenOOD: Benchmarking Generalized Out-of-Distribution Detection. **JINGKANG YANG et al.** 36th Conference on Neural Information Processing Systems. NEURIPS, 2022